# EUROPÄISCHE PATENTSCHRIFT

(11) **EP 2 930 138 B1**
(45) Veröffentlichungstag und Bekanntmachung des Hinweises auf die Patenterteilung: **26.05.2021**
(21) Anmeldenummer: 15162346.9
(22) Anmeldetag: 02.04.2015
(51) Int. Cl.: B65B 3/02, B29C 49/62, B65B 31/02

(54) **VORRICHTUNG UND VERFAHREN ZUR HERSTELLUNG EINER KUNSTSTOFFFLASCHE UND DEREN BEFÜLLUNG MIT EINEM FÜLLPRODUKT**
DEVICE AND METHOD FOR PRODUCING A PLASTIC BOTTLE AND FILLING SAME WITH A FILLER
DISPOSITIF ET PROCÉDÉ DE FABRICATION D'UNE BOUTEILLE EN PLASTIQUE ET DE SON REMPLISSAGE D'UN PRODUIT DE REMPLISSAGE

(30) Priorität: 04.04.2014 DE 102014104874
(43) Veröffentlichungstag der Anmeldung: 14.10.2015
(73) Patentinhaber: Krones AG, 93073 Neutraubling (DE)
(72) Erfinder: Voth, Klaus, 93073 Neutraubling (DE); Kronseder, Volker, 93073 Neutraubling (DE); Roidl, Wolfgang, 93073 Neutraubling (DE)
(74) Vertreter: Nordmeyer, Philipp Werner

(56) Entgegenhaltungen:
- DE-A1- 1 461 849
- DE-A1- 1 800 525
- US-A- 2 124 581
- US-A- 3 423 902
- US-A1- 2011 135 778

## Beschreibung

### Technisches Gebiet

Die vorliegende Erfindung betrifft eine Vorrichtung sowie ein Verfahren zur Herstellung eines Kunststoffbehälters sowie zu dessen Befüllung mit einem Füllprodukt, beispielsweise zur Herstellung und Befüllung von geblasenen oder streckgeblasenen PET-Flaschen.

### Stand der Technik

Aus dem Stand der Technik sind Blasmaschinen und Streckblasmaschinen bekannt, auf welchen Kunststoffbehälter, beispielsweise PET-Kunststoffflaschen, hergestellt werden. Hierzu werden so genannte Preforms in einem Ofen zunächst aufgewärmt und dann in der eigentlichen Blasmaschine beziehungsweise Streckblasmaschine in eine Blasform eingebracht, welche eine Innenkontur aufweist, die der Form der herzustellenden PET-Kunststoffflasche entspricht. Diese Preforms werden durch Beaufschlagung mit einem Blasmedium dann zu fertigen Kunststoffbehältern aufgeblasen. Die Kontur der Behälter wird durch den Blasdruck eingeprägt, welcher das Material des Preforms an die Innenwand der Kavität der Blasform presst.

Beim Streckblasverfahren wird vor dem hauptsächlichen Beaufschlagen des Preforms beziehungsweise des Innenraums des Preforms mit einem Blasmedium der Preform mechanisch mittels einer Reckstange vorgereckt und gleichzeitig der Preform vorgeblasen. Nach dem Vorblasen wird dann der Preform mit dem Blasmedium so beaufschlagt, dass der Preform an die Innenwand der Kavität der Blasform gepresst wird. Die Blasform wird daraufhin geöffnet, so dass die fertig geblasene beziehungsweise streckgeblasene PET-Kunststoffflasche entnommen werden kann und der weiteren Bearbeitung zugeführt werden kann.

Die Blasform weist dabei üblicherweise zumindest eine separate Bodenform sowie zwei Blasformhälften auf, welche so auseinandergefahren werden können, dass der fertige PET-Kunststoffbehälter problemlos entnommen werden kann. Gleichzeitig kann in die auf diese Weise geöffnete Blasform auch der Preform eingebracht werden.

Dabei gibt es unterschiedliche Möglichkeiten, die Blasmaschine auszubilden, insbesondere sind Blasmaschinen umlaufender Bauart bekannt, welche an einem Karussell angeordnete, umlaufende Blasformen aufweisen, so dass eine im Wesentlichen kontinuierliche Herstellung von Kunststoffflaschen erreicht werden kann. Weiterhin sind Blasmaschinen mit stationären Blasformen bekannt, wobei dann in der Regel mehrere Blasformen hintereinander angeordnet sind, oder eine Blasform mit mehreren einzelnen Kavitäten ausgestattet ist. Entsprechend können bei einer solchen Blasvorrichtung mit stationären Blasformen im Taktbetrieb PET-Kunststoffflaschen hergestellt werden, die dann nachfolgend der weiteren Bearbeitung zugeführt werden.

Die PET-Flaschen werden nach ihrer Herstellung in der Blasmaschine und ihrer Entnahme aus den jeweiligen Blasformen typischerweise in einem Füller befüllt, wobei die Behälter dort entweder am Boden oder im Falle von PET-Flaschen auch an deren Tragring gehalten werden und mittels eines prinzipiell bekannten Füllproduktventils gefüllt werden. Zur Befüllung der PET-Kunststoffflaschen sind eine Vielzahl unterschiedlicher Füllsysteme beziehungsweise Füllorgane bekannt, welche beispielsweise ein Freistrahlfüllen, ein Gegendruckfüllen, ein Gewichtsfüllen, ein Vakuumfüllen oder ein Dosierkammerfüllen ermöglichen, nur im einige der bekannten Füllverfahren zu nennen.

Vor der eigentlichen Befüllung der PET-Flaschen werden diese häufig noch gespült oder sterilisiert, um eine hygienische oder sterile Abfüllung zu ermöglichen. Weiterhin ist es bekannt, vor dem eigentlichen Befüllen der Behälter mit dem Füllprodukt, insbesondere bei sauerstoffempfindlichen Füllprodukten, in den Behältern eine definierte Gaszusammensetzung, bevorzugt eine sauerstoffarme Gaszusammensetzung bereitzustellen. Hierzu werden die zu befüllenden Behälter üblicherweise einer Gasspülung unterzogen, bei welcher zunächst ein Unterdruck in dem Behälter hergestellt wird, dann ein Spülgas, beispielsweise in Inertgas, wie CO₂ in den Behälter eingebracht wird, und dann in diese definierte Gasatmosphäre herein das Füllprodukt eingefüllt wird. Der Spülvorgang kann auch mehrfach durchgeführt werden, wenn eine besonders sauerstoffarme Atmosphäre im Innenraum erforderlich ist.

Es sind auch Behälterherstellungs- und Füllverfahren bekannt, bei welchen die Herstellung der Kunststoffflasche in einer Blasform- oder Streckblasformmaschine durchgeführt wird, und der Behälter gleich in der Blasmaschine selbst mit dem jeweiligen Füllprodukt befüllt wird. Vorteilhaft an diesem Verfahren ist, dass die Behälterinnenräume nach ihrer Herstellung jeweils nahezu steril sind, da die Preforms zum Blasformen bereits auf hohe Temperaturen, welche bei oder über 100°C liegen, aufgeheizt wurden. Ein direktes Befüllen direkt nach dem Herstellen der jeweiligen Kunststoffbehälter ermöglicht entsprechend ein steriles oder zumindest hygienisches Abfüllen des jeweiligen Füllprodukts. Beispielsweise ist aus der DE 26 57 670 A1 ein Blas- und Füllkopf für Vorrichtungen zum Formen und Abfüllen von Hohlkörpern aus Thermoplasten bekannt, bei welchen der ausgeformte Behälter mittels des Blas- und Füllkopfes nach dem Blasen gleich mit dem Füllprodukt beaufschlagt wird.

Aus der EP 1 529 620 A1 ist ein Füllkopf bekannt, bei welchem bereits das Aufblasen des jeweiligen Kunststoffbehälters mittels des Füllproduktes durchgeführt wird. Entsprechend ist der Behälter dann unmittelbar nach der Herstellung vollständig mit dem Füllprodukt gefüllt, so dass hier eine gleichzeitige Herstellung und Befüllung stattfindet.

Die DE 1 461 849 A1 beschreibt ein Verfahren zur Herstellung und Füllung von Kunststoffbehältern und eine Vorrichtung zu dessen Durchführung und gemäß den Überbegriffen der Ansprüche 1 und 11. Die DE 1 800 525 A beschreibt ein Verfahren und eine Vorrichtung zur Herstellung von mit flüssigem Gut gefüllten Hohlkörpern aus thermoplastischem Kunststoff.

Bei den bekannten Verfahren, in welchen die Behälter bereits in der Blasmaschine befüllt werden, findet diese Befüllung entweder bei Umgebungsdruckbedingungen oder bei Überdruckbedingungen statt.

### Darstellung der Erfindung

Ausgehend von dem bekannten Stand der Technik ist es eine Aufgabe der vorliegenden Erfindung, ein Verfahren sowie eine Vorrichtung zum Herstellen eines Kunststoffbehälters und dessen Befüllen mit einem Füllprodukt anzugeben, welches einen noch effizienteren Füllvorgang erlaubt.

Diese Aufgabe wird durch das Verfahren mit den Merkmalen des Anspruchs 1 gelöst. Vorteilhafte Weiterbildungen ergeben sich aus den Unteransprüchen.

Entsprechend wird ein Verfahren zur Herstellung eines Kunststoffbehälters sowie zu dessen Befüllung mit einem Füllprodukt vorgeschlagen, umfassend das Einbringen eines Preforms in eine Blasform und das Beaufschlagen des Preforms mit einem Blasmedium zum Herstellen eines Kunststoffbehälters. Der Innenraum des in der Blasform aufgenommenen Kunststoffbehälters wird auf einen Unterdruck evakuiert und ein unter Uberdruck oder Umgebungsdruck stehendes Füllprodukt in den unter Unterdruck stehenden Innenraum des Kunststoffbehälters eingeleitet.

Dadurch, dass vor dem Einfüllen des Füllprodukts in den fertig geblasenen Kunststoffbehälter dieser auf einen Unterdruck gebracht wird und das Füllprodukt mit einem Überdruck in den Behälter eingefüllt wird, kann ein besonders effizientes und schnelles Befüllen des Kunststoffbehälters mit dem Füllprodukt erfolgen. Da hier der gesamte Mündungsquerschnitt dazu ausgenutzt werden kann, das Füllprodukt in den Behälter herein zu leiten, und ein rückströmendes Fluid, beispielsweise ein aus dem Behälter durch das einströmende Füllprodukt verdrängte Gas nicht stattfindet, da der Behälter bereits weitgehend evakuiert ist, kann das Füllen besonders schnell stattfinden.

Weiterhin kann dadurch, dass eine große Druckdifferenz zwischen dem Innenraum und dem bereitgestellten Füllprodukt vorliegt, erreicht werden, dass das Füllprodukt (aus Sicht des Kunststoffbehälters) in den Behälter herein gesaugt wird beziehungsweise (aus Sicht der Füllproduktzuführung) in den Behälter herein gepresst wird.

Entsprechend kann ein besonders schnelles Befüllen des Kunststoffbehälters ermöglicht werden, und zwar sofort nachdem der Behälter evakuiert wurde.

Der Kunststoffbehälter wird vor dem Einleiten des Füllprodukts auf einen Unterdruck mit einem Absolutdruck von 0,5 bis 0,05 bar, bevorzugt 0,3 bis 0,1 bar, besonders bevorzugt von 0,1 bar evakuiert. Durch das Füllen des Füllprodukts in einen entsprechenden Unterdruck in dem Kunststoffbehälter ist der Innenraum des Kunststoffbehälters so evakuiert, dass bei der Befüllung mit dem Füllprodukt kein Gas durch das Füllprodukt verdrängt wird und entsprechend auch kein Gas aus dem Innenraum des Kunststoffbehälters ausströmt. Vielmehr kann der gesamte Mündungsquerschnitt des Kunststoffbehälters zum Einfließen des Füllprodukts verwendet werden. Mit anderen Worten tritt hier nur ein den Kunststoffbehälter hinein gerichteter Füllproduktstrom auf. Das Einfüllen des Füllprodukts wird weiterhin durch die bereitgestellte Druckdifferenz zwischen dem Unterdruck in dem zu befüllenden Kunststoffbehälter und dem Überdruck in dem Füllproduktreservoir unterstützt.

In einer weiteren vorteilhaften Ausgestaltung des Verfahrens wird das Füllprodukt unter Umgebungsdruck bereitgestellt, bevorzugt unter einem Absolutdruck von 1 bar. Der Überdruck ist entsprechend gegenüber dem sich im Kunststoffbehälter befindlichen Unterdruck als Überdruck ausgebildet, so dass ein Druckgradient zwischen dem bereitgestellten Füllprodukt und dem Kunststoffbehälter vorliegt.

Der Überdruck kann auch dem Sättigungsdruck des Füllprodukts entsprechen und bevorzugt bei einem Absolutdruck von 1,1 bar bis 6 bar, bevorzugt unter einem Absolutdruck von 2,5 bar bis 6 bar, besonders bevorzugt unter einem Absolutdruck von 2,8 bar bis 3,3 bar liegen. Durch das Vorliegen des Überdrucks beim jeweiligen Sättigungsdruck kann einem Entbinden des CO₂ bei einem karbonisierten Füllprodukt entgegen gewirkt werden.

In einer Weiterbildung liegt der Überdruck über dem Sättigungsdruck des Füllprodukts und liegt bevorzugt unter einem Absolutdruck von 1,6 bar bis 9 bar vor. Durch einen hohen Überdruck, der insbesondere über dem Sättigungsdruck des Füllprodukts liegt, kann erreicht werden, dass das CO₂ im Füllprodukt in Sättigung vorliegt und gleichzeitig der Druckgradient zwischen dem bereitgestellten Füllprodukt und dem Kunststoffbehälter noch größer ist, um den Füllvorgang noch weiter zu beschleunigen.

Über das bereitgestellte Druckgefälle zwischen dem Füllprodukt und dem Kunststoffbehälter kann eine schlagartige Befüllung des Kunststoffbehälters erreicht werden. Hierbei findet die schlagartige Befüllung im Wesentlichen zu Beginn des Füllvorganges statt. Zum Ende des Füllvorganges hin, wenn der Kunststoffbehälter weitgehend bereits mit dem Füllprodukt gefüllt ist, kann auch ein Angleichen der Drücke zwischen dem Druck im Kopfraum des Kunststoffbehälters und dem Druck des unter Überdruck bereit gestellten Füllprodukts stattfinden, da das Restgas in dem Kunststoffbehälter nun auf Atmosphärendruck beziehungsweise auf den durch das Füllprodukt bereit gestellten Druck ansteigen kann. Die erreichte Druckdifferenz beziehungsweise das Angleichen der Drücke hängt aber von den Ausgangsdrücken und insbesondere von dem anfänglichen Unterdruck im zu befüllenden Kunststoffbehälter ab.

Mit anderen Worten ist der Druckverlauf in dem zu befüllenden Kunststoffbehälter während der Befüllung abhängig von dem sich in dem zu befüllenden Kunststoffbehälter zu Beginn des Befüllvorgangs befindlichen Druck und damit auch von dem im Kunststoffbehälter befindlichen Restgas. Durch das Füllprodukt wird der Kunststoffbehälter so gefüllt, dass das Füllprodukt sich mit dem Restgas den verbleibenden Raum teilt. Entsprechend steigt der Druck im Kunststoffbehälter an. Durch die entstehende Druckkurve kann daher auch der jeweilige Befüllzustand des Kunststoffbehälters bestimmt werden und beispielsweise auch das zu erreichende Füllende auf dieser Grundlage bestimmt werden.

Um ein besonders hygienisches und sauerstoffarmes Füllen des Füllproduktes in den zu befüllenden Kunststoffbehälter zu erreichen, wird der zu befüllende Kunststoffbehälter besonders bevorzugt vor dem eigentlichen Evakuieren zum Befüllen des Kunststoffbehälters mit dem Füllprodukt schon einmal initial evakuiert und danach mit einem Spülgas gespült, woraufhin der Kunststoffbehälter dann erneut auf den oben genannten Unterdruck evakuiert wird und dann das Füllprodukt in den so evakuierten Kunststoffbehälter eingefüllt wird. Auf diese Weise kann erreicht werden, dass das Restgas, welches sich im Kunststoffbehälter befindet, ein weitgehend definiertes Gas, beispielsweise CO₂, ist, um ein Befüllen des zu befüllenden Kunststoffbehälters in einer definierten Atmosphäre und insbesondere einer sauerstoffarmen Atmosphäre zu ermöglichen. Hierdurch kann eine verlängerte Lager- beziehungsweise Lebensdauer erreicht werden und damit auch sauerstoffempfindliche Produkte wie beispielsweise Bier abgefüllt werden.

Bevorzugt wird der befüllte Kunststoffbehälter nach dem Einleiten des Füllprodukts mit einem Spanngas unter einem Absolutdruck von 2 bar bis 9 bar beaufschlagt, bevorzugt unter einem Absolutdruck von 3,5 bar bis 7 bar, besonders bevorzugt unter einem Absolutdruck von 3,8 bar bis 5,5 bar. Als Spanngas kann dabei besonders bevorzugt ein Inertgas verwendet werden, beispielsweise CO₂.

Bei einem Beaufschlagen des befüllten Kunststoffbehälters mit einem Spanngas unter erhöhtem Druck, beispielsweise mit CO₂, kann sich im Kopfraum des befüllten Kunststoffbehälters vorliegender Füllproduktschaum zurückgedrängt und in den Kunststoffbehälter gedrückt werden. Weiterhin kann die Füllproduktleitung von Schaum und Restfüllprodukt geleert werden. Darüber hinaus kann durch das Beaufschlagen des Kunststoffbehälters mit dem Spanngas ein erneutes Binden beziehungsweise Lösen des CO₂ in dem Füllprodukt begünstigt werden, so dass die Beruhigungszeit für das Füllprodukt in dem befüllten Kunststoffbehälter reduziert werden kann und entsprechend ein Ausschleusen oder Verschließen des befüllten Kunststoffbehälters vorbereitet werden kann.

Um ein Kollabieren des Kunststoffbehälters beim Evakuieren des Innenraumes des Kunststoffbehälters zu verhindern, wird bevorzugt auch außerhalb des Kunststoffbehälters ein Unterdruck bereitgestellt. Hierzu kann beispielsweise der zwischen der Wand des Kunststoffbehälters und der Innenwand der Blasform befindliche Raum evakuiert werden und ebenfalls auf einen Unterdruck gebracht werden. In einer bevorzugten Weiterbildung sind die Drücke im Innenraum des evakuierten Kunststoffbehälters und außerhalb des evakuierten Kunststoffbehälters im Wesentlichen gleich. Da im Innenraum des Kunststoffbehälters sowie auf dessen Außenseite entsprechend die gleichen Druckverhältnisse vorliegen, kann ein Kollabieren des Kunststoffbehälters aufgrund des angelegten Unterdruckes verhindert werden.

Bevorzugt wird der zwischen Preform und/oder Kunststoffbehälter und einer Innenwand der Kavität der Blasform definierte Außenraum vor dem Beaufschlagen des Preforms mit dem Blasmedium, vor dem Evakuieren des Innenraums des Kunststoffbehälter und/oder vor dem Einleiten des Füllprodukts in den Innenraum des Kunststoffbehälters auf einen Unterdruck evakuiert. Dabei wird der Außenraum besonders bevorzugt auf einen Unterdruck bei einem Absolutdruck von 0,5 bar bis 0,05 bar, bevorzugt 0,3 bar bis 0,1 bar, besonders bevorzugt von 0,1 bar, evakuiert. In einer Weiterbildung wird vor dem Einleiten des Füllprodukts in den Innenraum des Kunststoffbehälters der Druck im Innenraum und im Außenraum angeglichen.

Der Unterdruck in der Blasform kann dabei bereits vor dem Blasen beziehungsweise Streckblasen des Kunststoffbehälters aus dem Preform aufgebracht werden. Auf diese Weise kann der Blasbeziehungsweise Streckblasvorgang unterstützt werden, so dass der Kunststoffbehälter mit einem geringeren Blasdruck hergestellt werden kann, wodurch die gesamte Herstellung kostengünstiger ist.

Der im Innenraum des Kunststoffbehälters sowie der in der Blasform angelegte Druck können aber über den Herstellungsverlauf hinweg auch variiert werden, beispielsweise um ein Ablösen des hergestellten Kunststoffbehälters von den Wänden der Blasform zu vereinfachen. Hierzu kann beispielsweise zunächst ein leichter Unterdruck in dem fertig geblasenen Kunststoffbehälter bereitgestellt werden, so dass sich dieser ein wenig zusammenzieht beziehungsweise leicht kollabiert, um ein Ablösen von den Wänden der Kavität der Blasform zu ermöglichen. Es kann nach dem Herstellen des Kunststoffbehälters auch zunächst ein gegenüber dem Innenraum des Kunststoffbehälters leichter Überdruck in der Blasform, also zwischen den Wänden der Kavität und der Wand des Kunststoffbehälters, angelegt werden, um ein Ablösen zu unterstützen. Dies kann auch erst nach Abschluss des Befüllungsprozesses durchgeführt werden.

Nach der Befüllung des Kunststoffbehälters mit dem Füllprodukt kann der Kunststoffbehälter sowie die Blasform, also der zwischen dem Kunststoffbehälter und den Wänden der Kavität der Blasform angeordnete Zwischenraum wieder auf den gleichen beziehungsweise auf Umgebungsdruck gebracht werden, und dann kann der fertig befüllte Kunststoffbehälter ausgeschleust werden.

In einer Weiterbildung ist es möglich, den Innenraum nach abgeschlossener Befüllung mit einem Spanngas zu beaufschlagen, beispielsweise einem Inertgas, um das Kopfraumvolumen in dem Kunststoffbehälter mit einer definierten Atmosphäre bereitzustellen. Dies kann besonders bei sauerstoffempfindlichen Getränken von Bedeutung sein, wobei dann bevorzugt der Kopfraum mit einem Inertgas beaufschlagt wird.

Das beschriebene Abfüllverfahren eignet sich besonders gut zur Abfüllung stiller Getränke, beispielsweise stiller Wässer, Säfte oder Teeprodukte, die schlagartig in den zu befüllenden Kunststoffbehälter eingebracht werden können. Da bei stillen Getränken nur eine geringe oder keine Aufschäumneigung besteht, kann der Innenraum des dann befüllten Kunststoffbehälters gleich nach der Befüllung auf Umgebungsdruck gebracht werden und der befüllte Kunststoffbehälter kann, beispielsweise nach dem Entformen des dann befüllten Kunststoffbehälters aus der Blasform, zu einer nachfolgenden Bearbeitungsstation, beispielsweise einem Verschließer, gefördert werden.

Sollen mit dem Verfahren sowie der Vorrichtung karbonisierte Getränke abgefüllt werden, beispielsweise Softdrinks, Bier oder karbonisierte Mineralwässer, so findet durch das schlagartige Einfüllen des karbonisierten Getränks in den unter Unterdruck stehenden Innenraum des Kunststoffbehälters eine verstärkte Entbindung des CO₂ statt. Entsprechend besteht hier eine hohe Aufschäumneigung des karbonisierten Füllprodukts, so dass ein unmittelbares Angleichen des Innenraumes auf Umgebungsdruck direkt nach dem Einfüllen zu einem Herausschießen des Füllproduktes beziehungsweise einem Überschäumen des Füllproduktes führen würde. Entsprechend ist zumindest beim Befüllen des Kunststoffbehälters mit einem karbonisierten Füllprodukt bevorzugt, nach dem eigentlichen Befüllvorgang den dann mit dem Füllprodukt befüllten mit einem unter Druck stehenden Spanngas zu beaufschlagen, beispielsweise unter Druck stehendem CO₂, wobei der Druck bevorzugt zumindest beim Sättigungsdruck, besonders bevorzugt über dem Sättigungsdruck des CO₂ in dem karbonisierten Füllprodukt liegt. Auf diese Weise kann ein starkes Entbinden des CO₂ aus dem Füllprodukt vermieden werden und das erneute in Lösung gehen des CO₂ in das karbonisierte Füllprodukt weiter unterstützt werden. Entsprechend kann sich die Beruhigungszeit, in welcher sich das karbonisierte Füllprodukt wieder beruhigt, durch das Beaufschlagen des Innenraumes mit einem erhöhten CO₂-Druck beschleunigt werden, so dass die Beruhigungszeit reduziert wird. Entsprechend kann der auf diese Weise mit dem Spanngas beaufschlagte Kunststoffbehälter dann nach einer kürzeren Zeit wieder auf Normaldruck entlastet werden, ohne dass dann noch ein übermäßiges Aufschäumen beziehungsweise Herausschießen des Füllprodukts aus dem Kunststoffbehälter stattfinden würde.

Besonders bevorzugt wird der Kunststoffbehälter dann auf diesem Druckniveau verschlossen. Hierzu kann der fertig befüllte Kunststoffbehälter entweder unter der entsprechenden unter Druck stehenden Atmosphäre aus der Blasform entnommen und einem entsprechenden Verschließer zugeführt werden, oder aber das Verschließen findet statt, während sich der Kunststoffbehälter noch unter Druck in der Blasform befindet.

Wie bereits oben ausgeführt, wird der Kunststoffbehälter in einer bevorzugten Alternative mit einem stillen Füllprodukt befüllt, also einem nicht mit CO₂ versetzten Füllprodukt, wie beispielsweise einem stillen Getränke, beispielsweise einem stillen Wasser, einem Saft oder einem Teeprodukt. Bei der Befüllung mit einem stillen Füllprodukt kann der befüllte Kunststoffbehälter unter Umgebungsdruckbedingungen (1 bar Absolutdruck) verschlossen werden. Entsprechend kann der befüllte Kunststoffbehälter nach dem eigentlichen Befüllvorgang beispielsweise auf Umgebungsdruck entlastet werden und dann einem entsprechenden Verschließer zugeführt werden, welcher den befüllten Behälter dann ebenfalls im Wesentlichen unter Umgebungsdruckbedingungen verschließt.

Vor oder während des Verschließvorgangs kann auch ein Inertgas in den Kopfraum des befüllten Kunststoffbehälters eingebracht werden, beispielsweise durch Auf- beziehungsweise Einblasen eines gasförmigen Inertgases, oder durch Eintropfen eines verflüssigten Inertgases wie beispielsweise flüssigem Stickstoff, welches dann beim und nach dem Verschließen des Kunststoffbehälters in die gasförmige Phase übergeht. Entsprechend kann ein Verschließen des befüllten Kunststoffbehälters auch bei einem anderen Druck stattfinden, als die Befüllung.

Ein besonders effizienter Füllvorgang findet dann statt, wenn sowohl das Blasen des Kunststoffbehälters als auch das Befüllen des Kunststoffbehälters mit der gleichen Düse erfolgt, da die unterschiedlichen Schritte des Evakuierens und des Befüllens ohne Düsenwechsel durchgeführt werden können. In einer Variante kann jedoch auch von einer Blasdüse auf eine Fülldüse gewechselt werden.

Bevorzugt wird vor und/oder während und/oder nach dem Einleiten des Füllprodukts in den Innenraum des Kunststoffbehälters mindestens ein Aroma und/oder ein Getränkezusatz und/oder eine Getränkekomponente in den Innenraum des Kunststoffbehälters eindosiert. Unter Getränkezusätzen werden hier auch Sirup und/oder Konservierungsstoffe verstanden.

Durch das Eindosieren des Aromas und/oder Getränkezusatzes und/oder der Getränkekomponente in den Innenraum des Kunststoffbehälters kann ein flexibles Zudosieren von Aromen und/oder Getränkezusätzen und/oder Getränkekomponenten erreicht werden, welches einen schnellen Wechsel zwischen unterschiedlichen Aromen und Geschmacksrichtungen möglich macht. Durch den schnellen Füllvorgang, so wie er oben beschrieben ist, kann ein Teil des Behandlungswinkels in einem Rundläuferfüller durch andere Funktionen belegt werden. Entsprechend ermöglicht es das oben beschriebene Verfahren, zusätzlich einen Aromadosierer zum Zudosieren von Aromen und/oder Getränkezusätzen und/oder Getränkekomponenten vorzusehen, so dass ein vorteihafter Wechsel zwischen unterschiedlichen Geschmacksrichtungen möglich wird.

Die oben beschriebene Aufgabe wird weiterhin durch eine Vorrichtung zum Herstellen eines Kunststoffbehälters sowie zum Befüllen dessen mit einem Füllprodukt mit den Merkmalen des Anspruchs 11 erreicht. Vorteilhafte Weiterbildungen ergeben sich aus den Unteransprüchen.

Entsprechend wird eine Vorrichtung zum Herstellen eines Kunststoffbehälters und zu dessen Befüllung mit einem Füllprodukt vorgeschlagen, umfassend eine Blasform zum Blasen beziehungsweise Streckblasen eines Kunststoffbehälters aus einem Preform, und eine Füllproduktzuführung zum Zuführen eines Füllprodukts in den noch in der Blasform angeordneten Kunststoffbehälter. Erfindungsgemäß ist eine Vakuumvorrichtung zum Evakuieren des Innenraums des in der Blasform aufgenommenen Kunststoffbehälters vor dem Einfüllen des Füllprodukts vorgesehen. Die Vorrichtung ist so eingerichtet, dass der Kunststoffbehälter vor dem Einleiten des Füllprodukts auf einen Unterdruck bei einem Absolutdruck von 0,5 bar bis 0,05 bar evakuierbar ist und bei der Befüllung mit dem Füllprodukt kein Fluid durch das Füllprodukt verdrängt wird und entsprechend auch kein Fluid aus dem Innenraum des Kunststoffbehälters ausströmt.

Dadurch, dass die Vorrichtung eine Vakuumvorrichtung zum Zuführen eines Unterdrucks in den Innenraum aufweist, ist es möglich, den Innenraum vor dem Befüllen mit dem Füllprodukt zu evakuieren, um so die oben bereits beschriebene Beschleunigung des Füllvorganges zu erreichen.

Bevorzugt ist die Blasform druckdicht ausgebildet, derart, dass in der Blasform ebenfalls ein Unterdruck angelegt werden kann. Wie bezüglich des Verfahrens oben schon beschrieben, kann durch das Anlegen eines Unterdruckes zwischen der Wand des Kunststoffbehälters und der Wand der Kavität der Blasform erreicht werden, dass der Kunststoffbehälter nicht kollabiert, wenn er evakuiert wird. Weiterhin ist es möglich, definierte Druckverhältnisse auf der Außenseite des Kunststoffbehälters einzustellen, um beispielsweise ein Ablösen des Kunststoffbehälters von der Behälterwand zu unterstützen.

Die Blasform ist vorteilhaft mit der Vakuumvorrichtung in Kommunikation bringbar, um eine Kavität der Blasform vor dem Einbringen des Füllprodukts in den Kunststoffbehälter auf einen Unterdruck evakuieren zu können.

Bevorzugt ist eine Blasdüse zum Blasen beziehungsweise Streckblasen eines in der Blasform angeordneten Preforms in einen Kunststoffbehälter vorgesehen, und die Blasdüse beziehungsweise Fülldüse weiterhin ist dazu eingerichtet, den Innenraum des Kunststoffbehälters zu evakuieren und ein Füllprodukt in den evakuierten Innenraum des Kunststoffbehälters einzubringen.

Mit Vorteil ist eine Blasdüse zum Blasen beziehungsweise Streckblasen eines in der Blasform angeordneten Preforms in einen Kunststoffbehälter vorgesehen, und weiterhin ist eine Fülldüse zum Evakuieren des Innenraums des Kunststoffbehälters auf einen Unterdruck sowie zum Einfüllen eines Füllprodukts in den evakuierten Innenraum des Kunststoffbehälters vorgesehen, wobei die Blasdüse und die Fülldüse nacheinander mit der Mündung des Preforms beziehungsweise des Kunststoffbehälters dichtend in Eingriff bringbar sind.

In einer vorteilhaften Weiterbildung sind eine Mehrzahl von Blasformen an einem Rundläuferkarussell angeordnet, und an dem Rundläuferkarussell ist sowohl das Blasen oder Streckblasen eines Kunststoffbehälters aus einem in der jeweiligen Blasform aufgenommenen Preform, als auch ein Evakuieren des Innenraums des Kunststoffbehälters und ein Einleiten des Füllprodukts in den evakuierten Innenraum durchführbar.

Besonders bevorzugt ist ein Verschließer vorgesehen, mittels welchem der befüllte Kunststoffbehälter ohne Entlastung des Kunststoffbehälters auf Umgebungsdruck verschließbar ist. Damit kann ein Entlasten des befüllten Kunststoffbehälters vermieden werden und damit der Füllvorgang beschleunigt werden, da eine Beruhigung des Füllprodukts vor dem Verschließen zur Vermeidung von Überschäumen, Herausschießen und Überlaufen des Füllprodukts nicht abgewartet werden muss. Das Verschließen findet vielmehr unter den gleichen Bedingungen, insbesondere unter gleichen Druckbedingungen, statt, wie das Füllen.

Das eigentliche Verschließen der befüllten Kunststoffbehälter kann mittels allgemein bekannter Verschließer mit allgemein bekannten Verschlüssen durchgeführt werden. Der Verschließer kann entsprechend beispielsweise ein Kronkorker, ein Stopfenverschließer, ein Schraubverschließer oder Anrollverschließer sein.

Vorteilhaft ist ein Verschließkopf vorgesehen, welcher einen gegenüber der Umgebung abgedichteten Verschließkopfraum aufweist, der die Füllproduktleitung und einen Verschließer gemeinsam mit der Mündung des Kunststoffbehälters aufnimmt. Besonders bevorzugt ist der Verschließkopfraum zur Aufnahme des Kunststoffbehälters öffenbar und verschließbar, und weist bevorzugt zwei Verschließkopfbacken auf, welche zur Aufnahme des Kunststoffbehälters und bevorzugt zum Zuführen eines Behälterverschlusses öffenbar und verschließbar sind. Durch einen solchen Verschließkopf können Füllen und Verschließen in der gleichen Gasatmosphäre und bei dem gleichen Druck im Verschließkopfraum durchgeführt werden.

Die Füllproduktzuführung ist vorteilhaft mit einem Überdruck beaufschlagbar und bevorzugt als Füllproduktreservoir mit einem über einem Füllproduktspiegel vorliegenden und unter Druck stehenden Gasraum, oder als mit dem Füllprodukt gefüllte und unter Druck stehende Leitung, besonders bevorzugt eine unter Druck stehende schwarzgefüllte Leitung, ausgebildet.

In einer vorteilhaften Weiterbildung weist die Füllproduktleitung den gleichen Querschnitt auf, wie der Mündungsquerschnitt des zu befüllenden Kunststoffbehälters und insbesondere ist der vollständige Mündungsquerschnitt des zu befüllenden Kunststoffbehälters zum Einfüllen des Füllprodukts verwendbar. Durch die Verwendung des gesamten Querschnitts der Mündung kann ein besonders schnelles Einfüllen des Füllprodukts erreicht werden.

In einer weiteren vorteilhaften Weiterbildung ist ein Aromadosierer zum Eindosieren eines Aromas und/oder eines Getränkezusatzes und/oder einer Getränkekomponente in den Innenraum des Kunststoffbehälters vorgesehen. Der Aromadosierer kann beispielsweise in Form einer Schlauchpumpe vorgesehen sein, mittels welcher das Aroma und/oder der Getränkezusatz und/oder die Getränkekomponente aus einem entsprechenden Reservoir gepumpt und zudosiert wird.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Schnittansicht durch eine Vorrichtung zum Herstellen eines Kunststoffbehälters und dessen Befüllung mit einem in der Blasform aufgenommenen Preform;
- Figur 2: eine schematische Schnittansicht der in Figur 1 gezeigten Blasform mit einem vorgereckten und vorgeblasenen Preform;
- Figur 3: eine schematische Schnittansicht durch die Blasform der Figuren 1 und 2 mit einem fertig geblasenen Kunststoffbehälter;
- Figur 4: eine schematische Schnittansicht durch die Blasform der Figuren 1 bis 3, mit einem leicht eingezogenen Kunststoffbehälter;
- Figur 5: eine schematische Schnittansicht durch eine weitere Vorrichtung zum Herstellen eines Kunststoffbehälters und dessen Befüllung;
- Figur 6: eine schematische Draufsicht auf eine Streckblasmaschine gemäß einem Ausführungsbeispiel;
- Figur 7: eine schematische Draufsicht auf eine Streckblasmaschine in einem weiteren Ausführungsbeispiel;
- Figur 8: eine schematische Draufsicht auf eine Streckblasmaschine in noch einem weiteren Ausführungsbeispiel;
- Figur 9: eine schematische Draufsicht auf eine Streckblasmaschine in noch einem weiteren Ausführungsbeispiel;
- Figur 10: eine schematische Draufsicht auf eine Streckblasmaschine in noch einem weiteren Ausführungsbeispiel;
- Figur 11: eine schematische Draufsicht auf eine Streckblasmaschine in noch einem weiteren Ausführungsbeispiel;
- Figur 12: eine schematische Schnittansicht durch eine Streckblasmaschine mit einem Medienverteiler;
- Figur 13: eine schematische Schnittansicht durch eine Streckblasmaschine in einem weiteren Ausführungsbeispiel;
- Figur 14: eine schematische Schnittansicht durch eine Streckblasmaschine in noch einem weiteren Ausführungsbeispiel;
- Figur 15: eine schematische Schnittansicht durch eine Streckblasmaschine in noch einem weiteren Ausführungsbeispiel;
- Figur 16: eine schematische Schnittansicht durch eine Streckblasmaschine in noch einem weiteren Ausführungsbeispiel;
- Figur 17: eine schematische Draufsicht auf eine Streckblasmaschine in noch einem weiteren Ausführungsbeispiel;
- Figur 18: eine schematische Schnittansicht durch eine Vorrichtung gemäß Figur 4 in einer weiteren Ausführungsform mit einem zusätzlichen Aromadosierer; und
- Figur 19: eine schematische Schnittansicht durch eine Vorrichtung gemäß Figur 5 in einer weiteren Ausführungsform mit einem zusätzlichen Aromadosierer.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

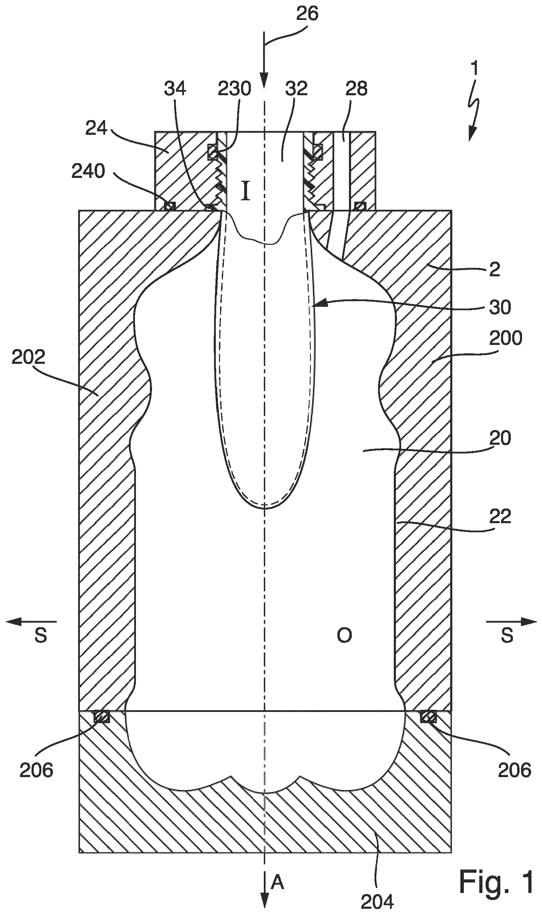

In den Figuren 1 bis 4 ist schematisch eine Vorrichtung 1 zum Herstellen von Kunststoffbehältern und zur Befüllung dieser mit einem Füllprodukt gezeigt. Zum Herstellen der Kunststoffbehälter ist eine Blasform 2 vorgesehen, welche eine Kavität 20 mit einer Innenwand 22 aufweist, die den Außenkonturen des herzustellenden Kunststoffbehälters entspricht. In der Blasform 2 kann auf prinzipiell bekannte Weise ein Kunststoffbehälter aus einem erhitzten Preform durch Blasen oder Streckblasen hergestellt werden. Beim Streckblasen wird der erhitzte Preform mit einer Reckstange vorgereckt und dabei vorgeblasen und dann durch Beaufschlagen mit dem Blasmedium, beispielsweise Druckluft, vollständig geblasen, so dass die Wandung des auf diese Weise erzeugten Kunststoffbehälters 3 den Konturen der Innenwand 22 der Kavität 20 der Blasform 2 folgt.

Die Blasform 2 weist zwei seitliche Blasformteile 200 und 202 und einen Blasformboden 204 auf. Zum Öffnen der Blasform 2, um beispielsweise einen neuen Preform einsetzen zu können oder einen fertigen Kunststoffbehälter entnehmen zu können, können die beiden seitlichen Blasformteile 200, 202 in Richtung der schematisch angedeuteten Pfeile S in seitliche Richtung auseinandergefahren werden, und der Blasformboden 204 kann abwärts in Richtung des Pfeils A bewegt werden. Die beiden seitlichen Blasformteile 200, 202 sowie der Blasformboden 204 bilden zusammen die Blasform 2 aus und umschließen die Kavität 20. Die seitlichen Blasformteile 200, 202 sowie der Blasformboden 204 sind dabei so geteilt, dass bei einer Bewegung der seitlichen Blasformteile 200, 202 in seitlicher Richtung S und des Blasformbodens 204 in Abwärtsrichtung A ein in der Kavität 20 ausgeformter Kunststoffbehälter der Kavität 20 entnommen werden kann, ohne dass er von Hinterschnitten blockiert werden würde. Solche Blasformen 2 sind prinzipiell bekannt. Die vorliegende Blasform 2 ist über schematisch angedeutete Dichtungen 206 druckdicht ausgeführt, derart, dass ein in der Kavität 20 der Blasform 2 eingebrachter Überdruck beziehungsweise ein in der Kavität 20 eingebrachter Unterdruck im Wesentlichen gehalten werden kann.

Ein Preform 30 ist in der Blasform 2 so in die Kavität 20 eingesetzt, dass der Mündungsbereich 32 des Preform 30, welcher auch das Gewinde umfasst, sowie der Tragring 34 den Preform 30 sicher in der Kavität 20 hält. Im gezeigten Ausführungsbeispiel ist hierfür eine Halshalterung 24 vorgesehen, welche den Tragring 34 des Preform 30 einklemmt und den Preform 30 entsprechend sicher in der Blasform 2 hält. Die Halshalterung 24 ist gegenüber den seitlichen Blasformteilen 200, 202 über eine Halshalterungsdichtung 240 druckdicht abgedichtet. Weiterhin ist eine Halsdichtung 230 vorgesehen, welche eine druckdichte Abdichtung des Mündungsbereichs 32 des Preforms 30 gegenüber der Halshalterung 24 ermöglicht.

Durch die gezeigten Dichtungen kann der Preform 30 entsprechend so in der Blasform 2 aufgenommen werden, dass der Innenraum I des Preform druckdicht getrennt ist von dem Außenraum O, welcher zwischen der Außenwand des Preform 30 und der Innenwand 22 der Kavität 20 der Blasform 2 ausgebildet ist. Entsprechend ist der Außenraum O zwischen Preform 30 und Innenwand 22 der Blasform 2 gegenüber dem Innenraum I des Preform 30 abgedichtet, so dass im Innenraum I und im Außenraum O auch unterschiedliche Drücke vorliegen und gehalten werden können.

Der Außenraum O zwischen dem Preform 30 und der Innenwand 22 der Kavität 20 der Blasform 2 ist weiterhin gegenüber der Umgebung vollständig abgedichtet. Der eingesetzte Preform 30, der über die Halsdichtung 230 abgedichtet ist, wirkt dabei im Prinzip wie ein Stopfen, mit welchem der Einlassbereich 26 der Blasform 2 verschlossen ist.

Der Außenraum O ist über einen Druckausgleichskanal 28 zugänglich. Der Innenraum I ist über den Mündungsbereich 32 des Preform 30 zugänglich.

Wird der Preform 30 in die Blasform 2 eingesetzt und sind die seitlichen Blasformteile 200, 202 sowie der Blasformboden 204 abgedichtet geschlossen, so kann der eigentliche Blasvorgang beziehungsweise Streckblasvorgang beginnen. Der Preform 30 wird dabei in die Blasform 2 üblicherweise in einem vorgeheizten Zustand eingesetzt, typischerweise bei Temperaturen um die 100°C. Der Preform wurde entsprechend vor dem Einsetzen in die Blasform 2 in einem Ofen aufgeheizt.

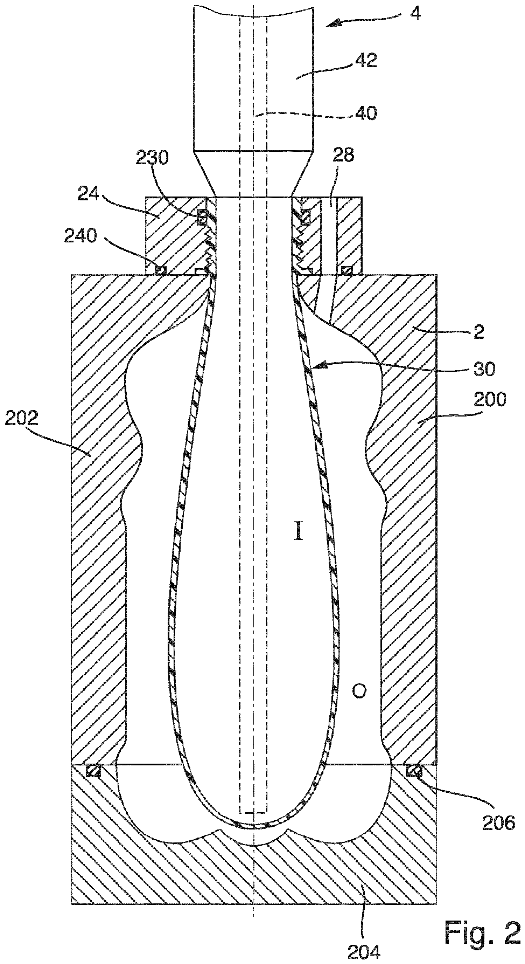

In Figur 2 ist schematisch ein erster Schritt des Streckblasvorganges gezeigt, bei welchem eine Blasdüse 4 abdichtend auf der Halshalterung 24 aufgesetzt ist, und eine Reckstange 40 in den Preform 30 eingebracht ist. Mittels der Reckstange 40 wird der Preform 30 vorgereckt. Gleichzeitig findet über einen Blasmedienkanal 42 ein Vorblasen und dann das Blasen des Kunststoffbehälters statt.

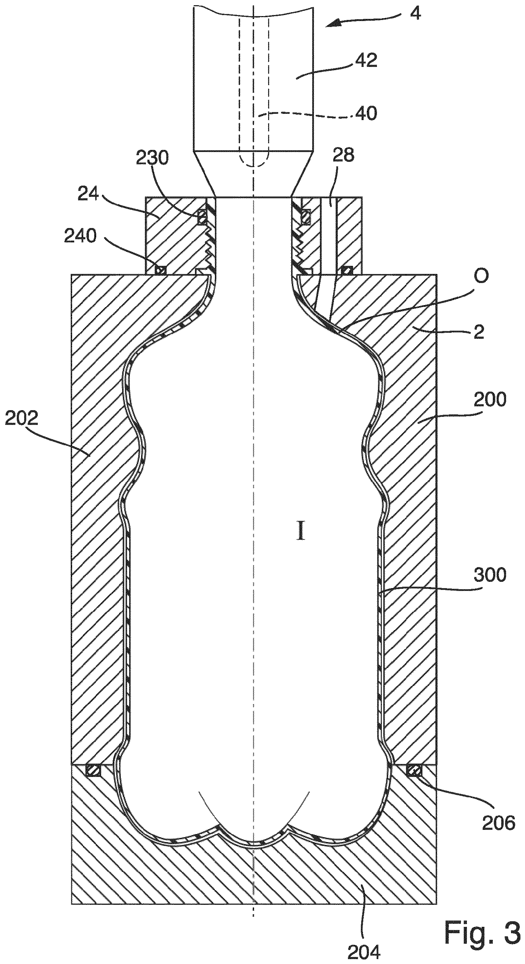

In Figur 3 ist schematisch der Zustand gezeigt, in welchem der Blasvorgang abgeschlossen ist. Hier ist die Reckstange 40 bereits wieder zurückgezogen und der Innenraum I des nun fertig geblasenen Kunststoffbehälters 3 steht auf dem über den Blasmedienkanal 42 zugeführten Überdruck, welcher dafür sorgt, dass die Behälterwand 300 an der Innenwand 22 der Kavität anliegt und den Konturen der Innenwand 22 der Kavität 20 folgt. Entsprechend hat die auf diese Weise hergestellte Kunststoffbehälter 3 die durch die Innenwand 22 der Kavität 20 vorgegebene äußere Form.

Das sich im Außenraum O befindliche Gas, beispielsweise die Umgebungsluft, welche beim Einsetzen des Preforms 30 vor dem Schließen der Blasform 2, so wie in Figur 1 zu sehen, aufgenommen war, kann über den Druckausgleichskanal 28 entweichen. Damit besteht im Innenraum I des Kunststoffbehälters 3 ein Überdruck, gegenüber dem beispielsweise auf Atmosphärendruck (1 bar) liegenden Außenraum O in der Blasform 2, welcher über den Druckausgleichskanal 28 eingestellt wird.

In einem alternativen Prozess kann der Außenraum O auch bereits vor dem Beginn des Streckblasens evakuiert werden. Damit kann der Blasprozess durch den im Außenraum O angelegten Unterdruck unterstützt werden, so dass der Druck, welcher auf den Innenraum I des Kunststoffbehälters 3 zum Blasen oder Streckblasen aufgebracht werden muss, reduziert werden kann. Durch das Aufbringen des Unterdrucks im Außenraum O kann dann beim Blasen oder Streckblasen des Kunststoffbehälters 3 der Druckluftbedarf reduziert werden, wodurch der Prozess insgesamt kostengünstiger wird. Das Anlegen eines Unterdrucks an den Außenraum O unterstützt entsprechend den Vorgang des Formens der Kunststoffflasche.

Der auf den Außenraum O aufgebrachte Unterdruck liegt zur Unterstützung des Blasens oder des Streckblasens bevorzugt bei einem Absolutdruck von 0,5 bis 0,05 bar.

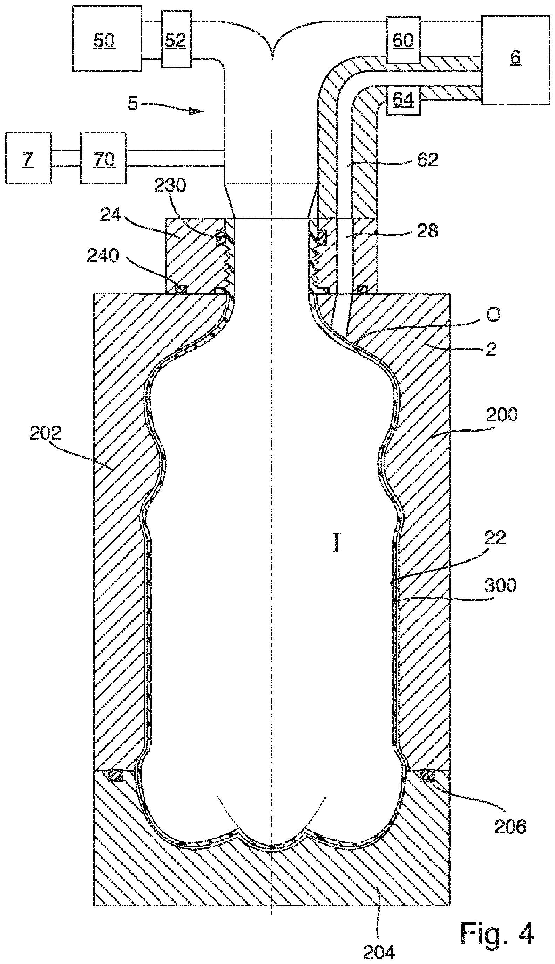

In Figur 4 ist nun eine Fülldüse 5 auf dem Einlassbereich 26 der Blasform 2 abdichtend aufgesetzt. Die Fülldüse 5 ist zum einen mit einer schematisch angedeuteten Füllproduktzuführung 50 verbunden und zum anderen mit einer Vakuumvorrichtung 6. Mittels eines Füllproduktventils 52 kann die Füllproduktzuführung 50 mit der Fülldüse 5 in Kommunikation gebracht werden, um ein Füllprodukt in den Kunststoffbehälter 3 einzubringen. Über ein Vakuumventil 60 kann die Fülldüse 5 mit der Vakuumvorrichtung 6 in Kommunikation gebracht werden, um den Kunststoffbehälter 3 zu evakuieren.

Die Füllproduktzuführung 50 kann beispielsweise mit einem Füllproduktreservoir verbunden sein, welches mit einem Überdruck beaufschlagt, so dass das Füllproduktreservoir insgesamt unter Druck steht. Das in einem Gasraum des Füllproduktreservoirs aufgenommene Gas ist bevorzugt ein Inertgas und besonders bevorzugt CO₂, insbesondere dann, wenn es sich bei dem Füllprodukt um ein karbonisiertes Getränk, beispielsweise Bier, einen Softdrink oder Mineralwasser, handelt. Wenn das Füllprodukt ein karbonisiertes Füllprodukt ist, kann durch das Bereitstellen eines Überdruckes in der Füllproduktzuführung 50 ein solcher Druck bereitgestellt werden, der ein Entbinden des CO₂ aus dem Füllprodukt unterbindet. Besonders bevorzugt wird hier ein Absolutdruck von 1 bar bis 9 bar bereitgestellt, bevorzugt ein Absolutdruck von 2,5 bar bis 6 bar, besonders bevorzugt ein Absolutdruck von 2,8 bar bis 3,3 bar.

In einer Weiterbildung wird das Füllprodukt in der Füllproduktzuführung 50 unter Umgebungsdruck bereitgestellt, bevorzugt unter einem Absolutdruck von 1 bar. Das Füllprodukt kann auch unter einem Überdruck, der dem Sättigungsdruck des Füllprodukts entspricht, bereitgestellt werden, bevorzugt bei einem Absolutdruck von 1,1 bar bis 6 bar. Das Füllprodukt kann in einer weiteren Ausbildung auch unter einem Überdruck, der über dem Sättigungsdruck des Füllprodukts liegt, bereit gestellt werden, bevorzugt unter einem Absolutdruck von 1,6 bar bis 9 bar.

Mittels der Vakuumvorrichtung 6 kann der Innenraum I des Kunststoffbehälters 3 evakuiert werden und entsprechend das sich im Innenraum I des Kunststoffbehälters 3 befindliche Gas abgepumpt werden. Der mit der Vakuumvorrichtung 6 im Innenraum des Kunststoffbehälters 3 bereitstellbare Druck liegt bei einem Absolutdruck von 0,5 bar bis 0,05 bar, bevorzugt bei 0,3 bar bis 0,1 bar, besonders bevorzugt bei ca. 0,1 bar. Entsprechend kann mittels der Vakuumvorrichtung 3 ein großer Teil des sich im Innenraum I befindlichen Gases abgepumpt werden.

Mittels der Vakuumvorrichtung 6, welche mit dem Innenraum I des Kunststoffbehälters 3 in Fluidverbindung bringbar ist, kann damit der Innenraum I vor der eigentlichen Befüllung mit dem Füllprodukt evakuiert werden. Hierzu wird, wenn das Vakuumventil 60 geöffnet ist, über die Vakuumvorrichtung 6 das Gas, welches sich im Innenraum I befindet, abgezogen. Das sich im Innenraum I des Kunststoffbehälters 3 befindliche Gas ist typischer Weise das Blasmedium, mittels welchem der Kunststoffbehälter 3 aus dem Preform 30 geblasen wurde.

Die Vakuumvorrichtung 6 ist so ausgebildet, dass sie im Innenraum I einen deutlichen Unterdruck, im Bereich eines Absolutdruckes von 0,5 bis 0,05 bar, bereitstellen kann.

Die Ventile, insbesondere das Füllproduktventil 52 und das Vakuumventil 60, werden über eine hier nicht explizit gezeigte Steuervorrichtung angesteuert. Die Steuervorrichtung kann entweder als analoge Steuerung ausgeführt sein, oder zweckmäßig als programmierte Steuerung, beispielsweise in Form eines PC oder Industrie PC. Die Steuervorrichtung kann auch ein Modul der gesamten Anlagensteuerung einer Blasmaschine oder einer Füllanlage sein.

Die Steuervorrichtung ist dazu eingerichtet, die hier beschriebenen Verfahren durchzuführen und ist insbesondere dazu programmiert, dieses Verfahren durchzuführen und die entsprechenden Anlagenkomponenten zu steuern. Entsprechend werden die Ventile und Komponenten nacheinander so angesteuert, dass das Verfahren in der beschriebenen Form abläuft.

Besonders bevorzugt, in den Figuren aber nicht gezeigt, ist die Steuervorrichtung mit Sensoren und Gebern verbunden, die beispielsweise die Druckverhältnisse im Innenraum I des Kunststoffbehälters 3 überwachen.

Der Druckausgleichkanal 28 ist über eine Vakuumleitung 62 und ein Druckausgleichsventil 64 ebenfalls mit der Vakuumvorrichtung 6 verbunden, um auch den Außenraum O evakuieren zu können. Die hierbei im Außenraum O zu erreichenden Unterdrücke entsprechend damit den im Innenraum I erreichbaren Unterdrücken.

In einer Alternative kann sich der Druck im Innenraum I auch von dem im Außenraum O unterscheiden.

In dem gezeigten Ausführungsbeispiel wird nun zur Befüllung des Kunststoffbehälters 3 mit dem Füllprodukt zunächst die Fülldüse 5 über das Vakuumventil 60 mit der Vakuumvorrichtung 6 in Kommunikation gebracht. Entsprechend wird der Innenraum I des Kunststoffbehälters 3 evakuiert, derart, dass ein Unterdruck im Innenraum I bereitgestellt wird.

Gleichzeitig wird auch der Außenraum O über den Druckausgleichskanal 28, die Vakuumleitung 62 und das Druckausgleichsventil 64 mit der Vakuumvorrichtung 6 verbunden, derart, dass auch im Außenraum O ein Unterdruck bereitgestellt wird. Der im Außenraum O aufgebrachte Unterdruck ist bei gleichzeitigem Öffnen des Vakuumventils 60 sowie des Druckausgleichsventils 64 und damit einem Verbinden mit der Vakuumvorrichtung 6 im Wesentlichen identisch zu dem im Innenraum I bereitgestellten Druck. Mit anderen Worten wird sowohl im Innenraum I als auch im Außenraum O der gleiche Unterdruck bereitgestellt.

In einer besonders bevorzugten Ausführungsform können die Drücke im Innenraum I und im Außenraum O leicht unterschiedlich sein und deren Differenz oder auch deren Absolutdruck auch über den Zeitverlauf hinweg variieren.

Um das Festhaften der Außenwand 300 des Kunststoffbehälters 3 an der Innenwand 22 der Kavität 20 der Blasform 2 nach dem Blasen zu verhindern beziehungsweise ein Ablösen der Behälterwand 300 von der Innenwand 22 der Blasform 2 zu unterstützen, kann der Druck im Innenraum I des Kunststoffbehälters 3 geringer sein, als der Druck im Außenraum O. Entsprechend zieht sich der Kunststoffbehälter 3 ein wenig zusammen, so dass die Kunststoffwand 3 vollständig, beziehungsweise zumindest in einem Teilbereich, von der Innenwand 22 der Kavität 20 der Blasform 2 abgelöst ist, so wie es schematisch in Figur 4 angedeutet ist.

In einer weiteren bevorzugten Ausführungsform kann auch die Beaufschlagung des Außenraumes O mit dem Unterdruck leicht verzögert zu der Beaufschlagung des Innenraums I mit dem Unterdruck stattfinden, so dass zunächst ein Ablösen der Wand 300 des Kunststoffbehälters 3 von der Innenwand 22 der Kavität 20 stattfindet und erst dann der Unterdruck im Außenraum O bereitgestellt wird. Hierzu werden das Vakuumventil 60 und das Druckausgleichsventil 64 kurz nacheinander geöffnet, so dass zunächst der Innenraum I des Kunststoffbehälters 3 mit der Vakuumvorrichtung 6 in Kommunikation tritt, und dann erst der Außenraum O. Hier kann auch eine oszillierende Druckfolge aufgebaut werden, derart, dass mehrere Kompressionen und entsprechende Expansionen der Behälterwand 300 des Kunststoffbehälters 3 erreicht werden, um ein vollständiges Ablösen der Behälterwand 300 von der Innenwand 22 der Blasform 2 zu erreichen.

Nachdem sowohl der Innenraum I als auch der Außenraum O auf den gleichen Unterdruck beziehungsweise einen ähnlichen Unterdruck gebracht wurden, werden das Vakuumventil 60 und das Druckausgleichsventil 64 geschlossen und das Füllproduktventil 52 geöffnet, um das Füllprodukt aus der Füllproduktzuführung 50 in den Innenraum I einströmen zu lassen.

Das Füllprodukt aus der Füllproduktzuführung 50 steht dabei unter einem Uberdruck. Durch das Druckgefälle beziehungsweise den Druckgradienten findet entsprechend ein im Wesentlichen schlagartiges Befüllen des Innenraumes I mit dem Füllprodukt statt. Der Befüllungsvorgang findet dabei besonders schnell statt, da neben dem großen Druckgradienten gleichzeitig auch das Rückströmen eines Fluids durch den Mündungsbereich 32 des Kunststoffbehälters 3 nicht stattfindet. Vielmehr füllt das aus der Füllproduktzuführung 50 zugeführte Füllprodukt zunächst den Innenraum I so auf, dass der in diesem vorliegende Unterdruck langsam abgebaut wird.

Um entsprechend einen in der Blasform 2 erzeugten und noch in dieser aufgenommenen Kunststoffbehälter 3 mit einem Füllprodukt zu befüllen, wird der Innenraum I des Kunststoffbehälters 3 bei verschlossenem Füllproduktventil 52 und geöffnetem Vakuumventil 60 über die Vakuumvorrichtung 6 evakuiert und entsprechend auf einen Unterdruck gebracht. Ist der vorgegebene Unterdruck, beispielsweise 0,1 bar, im Innenraum I des Kunststoffbehälters 3 erreicht, wird das Vakuumventil 60 verschlossen und das Füllproduktventil 52 geöffnet. Durch die große Druckdifferenz zwischen dem Innenraum I des Kunststoffbehälters 3, in welchem ein Unterdruck herrscht, und dem unter Überdruck stehenden Füllprodukt kommt es zu einer schlagartigen Befüllung des Kunststoffbehälters 3 mit dem Füllprodukt. Der Füllvorgang kann damit sehr schnell durchgeführt werden und ist entsprechend auch schnell beendet. Gleichzeitig wird der Kunststoffbehälter 3 durch den im Außenraum O angelegten Unterdruck vor einem Kollaps geschützt.

Der Unterdruck im Außenraum O kann während des Füllvorgangs auch wieder abgebaut werden, da während des Füllvorgangs auch der Unterdruck im Innenraum I abgebaut wird. Der Unterdruck im Außenraum O muss nur so groß gehalten werden, dass ein Kollabieren des Kunststoffbehälters 3 auf Grund des Unterdrucks im Innenraum I vermieden wird. Über den Druckausgleichskanal 28 kann eine entsprechende Führung des Drucks im Außenraum O erreicht werden.

In einer bevorzugten Ausführungsform folgt der Druck im Außenraum O dem Druck im Innenraum I, so dass hier beim Befüllen stets im Wesentlichen der gleiche Druck herrscht. Auf diese Weise kann aufgrund der Eigenstabilität der Kunststoffflasche 3 immer noch ein Kollabieren vermieden werden, ein übermäßiges Anpressen der Wandung der Kunststoffflasche 3 an die Innenwand 22 der Blasform 2 kann so aber vermieden werden, so dass auch ein Anhaften oder Anbacken der Behälterwandung an der Innenwand 22 der Blasform 2 verringert oder vermieden werden kann.

Ab einem bestimmten Füllgrad kann auch der Druck im Außenraum O höher sein, als im Innenraum I, um ein Ablösen der Behälterwandung der Kunststoffflasche 3 von der Innenwand 22 der Blasform 2 zu unterstützen.

Da während des Befüllvorgangs aufgrund des sich bereits im Kunststoffbehälter 3 befindlichen Unterdrucks zumindest in der ersten Phase der Befüllung kein Gas aus dem Kunststoffbehälter 3 verdrängt wird wenn das Füllprodukt einströmt, sondern lediglich der sich im Innenraum I befindliche Unterdruck abgebaut wird, kann das Füllprodukt auch über den gesamten Mündungsquerschnitt hinweg in den Kunststoffbehälter 3 einströmen. Damit kann beim Befüllen des Kunststoffbehälters 3 mit dem Füllprodukt der Füllvorgang zumindest über den größten Bereich des Füllvorganges hinweg mit einem Fluidstrom in nur eine Richtung erreicht werden, nämlich einem Fluidstrom, welcher ausschließlich in den Kunststoffbehälter 3 hinein gerichtet ist. Ein Gegenstrom eines Fluids, beispielsweise eines Gases, findet nicht statt, da eine Verdrängung von Gas aus dem Kunststoffbehälter 3 nicht stattfindet. Vielmehr wird durch die Befüllung des Kunststoffbehälters 3 lediglich der sich im Innenraum I des Kunststoffbehälters 3 befindliche Unterdruck langsam abgebaut. Erst zum Ende des Befüllvorganges hin, wenn es im Innenraum I des Kunststoffbehälters 3 zu einem langsamen Ansteigen des Druckes und eventuell zu einem Angleichen der Druckverhältnisse im Kunststoffbehälter 3 an den Druck des Füllprodukts kommt, wird sich das Einströmen des Füllproduktes verlangsamen.

Abhängig von dem jeweiligen im Innenraum I des Kunststoffbehälters 3 bereitgestellten Unterdruck kann eine solche Verlangsamung aber auch vermieden werden. Je niedriger der Druck im zu befüllenden Kunststoffbehälter 3 ist, desto geringer wird die Verlangsamung ausfallen, da bei einem niedrigeren Druck des zu befüllenden Kunststoffbehälters 3 auch zum Zeitpunkt des Verschließens des Füllproduktventils 52 noch ein signifikanter Unterdruck im Kunststoffbehälter 3 herrscht.

Der Zeitpunkt der Verlangsamung hängt daher von dem im Kunststoffbehälter 3 vorliegenden Unterdruck und mithin von der Auslegung der Vakuumvorrichtung 6 ab. Je niedriger der Druck im Kunststoffbehälter 3 ist, desto später kommt es zu einer Angleichung der Druckverhältnisse beziehungsweise in einem Extremfall eines besonders hohen Vakuums in dem Kunststoffbehälter 3 überhaupt nicht zu einer Angleichung der Druckverhältnisse, sondern es wird im Kopfraum immer noch ein Unterdruck bestehen, auch wenn das gewünschte Füllniveau bereits erreicht wurde und das Füllproduktventil 52 bereits geschlossen wurde.

Nachdem der Befüllvorgang so abgeschlossen ist und der Kunststoffbehälter 3 mit der gewünschten Menge an Füllprodukt gefüllt ist, schließt das Füllproduktventil 52.

Handelt es sich bei dem Füllprodukt um ein stilles Füllprodukt, beispielsweise ein stilles Wasser oder einen Fruchtsaft, so kann im Anschluss an den Befüllvorgang der Innenraum I und der Außenraum O auf Umgebungssdruck entlastet werden, der Kunststoffbehälter 3 durch Öffnen der beiden seitlichen Blasformteile 200, 202 sowie des Blasformbodens 204 aus der Blasform 2 entformt werden, und dann der nächsten Bearbeitungsstation, beispielsweise einem Verschließer, zugeführt werden. Dieser Prozess ist besonders bevorzugt, da das Befüllen des zu befüllenden Kunststoffbehälters 3 in der Blasform 2 aufgrund des im Innenraum I vorliegenden Unterdrucks so schnell stattfindet, dass die Prozesszeit im Vergleich zu einem reinen Blasprozess ohne Befüllung nicht wesentlich ansteigt oder überhaupt nicht ansteigt. Damit kann ein fertig befüllter Kunststoffbehälter 3 in der Prozesszeit erhalten werden, die in herkömmlichen Blasmaschinen allein für das Blasen des Kunststoffbehälters nötig war.

Der befüllte Kunststoffbehälter 3 kann dann beispielsweise zu einem Verschließer transportiert werden, welcher einen Behälterverschluss auf den Kunststoffbehälter 3 aufbringt. Der Transport des befüllten Kunststoffbehälters 3 zum Verschließer kann dabei entweder in einer Reinraumatmosphäre stattfinden, oder unter Umgebungsbedingungen. Wird hier unter Reinraumatmosphäre transportiert, so müssen Verschließer und Blasmaschine entsprechend im gleichen Isolator angeordnet sein, oder zumindest über einen Kanal mit definierter Atmosphäre miteinander verbunden sein.

Ist das abgefüllte Füllprodukt ein karbonisiertes Füllprodukt wie beispielsweise Bier, Mineralwasser oder ein Softdrink, so kann über eine Spanngasvorrichtung 7, welche über ein Spanngasventil 70 mit der Fülldüse 5 in Kommunikation tritt, zusätzlich ein Spanngas in den Innenraum I eingeleitet werden, um ein übermäßiges Entbinden des im Füllprodukt gelösten CO₂ zu verhindern beziehungsweise ein erneutes Lösen des im Füllprodukt vorliegenden CO₂ zu unterstützen.

Mittels der Spanngasvorrichtung 7 kann bei geöffnetem Spanngasventil 70 beispielsweise CO₂ in den Kunststoffbehälter 3 eingebracht werden. Als Spanngas kann auch ein anderes Inertgas verwendet werden. Das Spanngas kann unter einem Absolutdruck von 2 bar bis 9 bar, bevorzugt unter einem Absolutdruck von 3,5 bar bis 7 bar, besonders bevorzugt unter einem Absolutdruck von 3,8 bar bis 5,5 bar, den befüllten Kunststoffbehälter 3 beaufschlagen.

Ein bevorzugtes Füllverfahren zum Abfüllen sauerstoffempfindlicher Produkte umfasst weiterhin zunächst ein Evakuieren des Kunststoffbehälters 3 durch Öffnen des Vakuumventils 60 bei geschlossenem Füllproduktventil 52 und geschlossenem Spanngasventil 70 mittels der Vakuumvorrichtung 6. Bei einem Druck von 0,1 bar durch das Evakuieren sind entsprechend 90% des Luftsauerstoffs aus dem Kunststoffbehälter 3 entfernt. Ist der gewünschte Unterdruck im Kunststoffbehälter 3 erreicht, beispielsweise ein Druck von 0,1 bar, wird das Vakuumventil 60 verschlossen und das Spanngasventil 70 geöffnet, und über die Spanngasvorrichtung 7 entsprechend Spanngas, beispielsweise CO₂, in den Kunststoffbehälter 3 eingeleitet.

Nach dem Einbringen des Spanngases über die Spanngasvorrichtung 7 wird das Spanngasventil 70 wieder verschlossen, und das Vakuumventil 60 erneut geöffnet, so dass über die Vakuumvorrichtung wiederum das Gasgemisch aus dem Kunststoffbehälter 3 abgezogen werden kann. Auf diese Weise wird bei einem Reduzieren des Druckes im Kunststoffbehälter 3 wiederum auf 0,1 bar eine gegenüber dem Ausgangszustand 99%-ige Reduktion des Sauerstoffgehalts in dem Kunststoffbehälter 3 erreicht. Dies ist besonders bevorzugt, wenn sauerstoffempfindliche Füllprodukte abgefüllt werden sollen und als Blasmedium komprimierte Umgebungsluft verwendet wird. Das im Innenraum I des fertig geblasenen Kunststoffbehälters 3 nach dem Abschluss des Blasvorganges vorliegende Gasgemisch ist nämlich Luft mit dem entsprechenden Anteil an Luftsauerstoff.

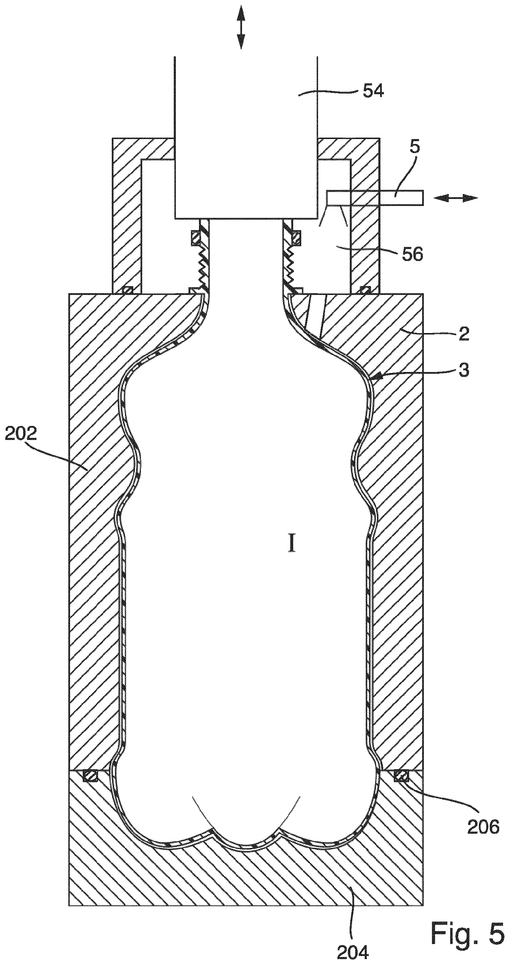

In einer besonders bevorzugten Variante kann nach dem Befüllen mit dem Füllprodukt auch gleich ein Verschluss auf den Kunststoffbehälter aufgebracht werden. Hierzu wird, wie schematisch in Figur 5 gezeigt, in einer weiteren Ausführungsform eine Kombination aus einer schematisch angedeuteten Fülldüse 5 und einem schematisch angedeuteten Verschließer 54 vorgesehen sein, welche abwechselnd mit dem Mündungsbereich 32 des Kunststoffbehälters 3 in Eingriff bringbar sind. Entsprechend wird zunächst der Kunststoffbehälter 3, wie oben beschrieben, über die Fülldüse 5 evakuiert und dann mit dem Füllprodukt beaufschlagt und nachfolgend wird über den Verschließer 54 der Behälterverschluss aufgebracht. Der Verschließer 54 sowie die Fülldüse 5 sind dabei in einem gemeinsamen Verschließerraum 56 angeordnet, welcher gegenüber der Umgebung abgedichtet ist. Entsprechend kann ein über die Fülldüse 5 aufgebrachter Vorspanndruck, welcher beispielsweise von einer Spanngasvorrichtung 7 zugeführt wird, auch dem Verschließerraum 56 zugeführt werden, so dass ein Verschließen des Kunststoffbehälters 3 unter der Vorspannatmosphäre und insbesondere unter dem Vorspanndruck durchgeführt werden kann.

Nach dem Verschließen des Kunststoffbehälters 3 wird dieser dann aus der Blasform 2 entformt, ausgeschleust und einer weiteren Behandlung beziehungsweise in den weiteren Produktionsschritten zugeführt.

Bevorzugt kann die Vorrichtung 1 also eine an sich bekannte Streckblasmaschine, welche unter anderem eine Blasform 2 in prinzipiell bekannter Weise aufweist, dahingehend erweitern, dass ein sehr schnelles Befüllen eines in der Blasvorrichtung hergestellten Kunststoffbehälters 3, der noch in der Blasform 2 aufgenommen ist, stattfinden kann. Hierzu wird entsprechend ein Unterdruck im Innenraum I des Kunststoffbehälters 3 bereitgestellt, so dass der Kunststoffbehälter 3 sofort nach dessen Fertigstellung mit dem Füllprodukt befüllt werden kann, und es sich bei dem Füllverfahren im Wesentlichen um ein Vakuumfüllverfahren handelt. Dabei wird der Kunststoffbehälter 3 nach der Ausformung der Außenkonturen, also nach dem Blasvorgang, zunächst entlastet, so dass in diesem wieder Umgebungsdruckbedingungen vorherrschen, und danach wird der Kunststoffbehälter 3, der sich noch in der Blasform 2 befindet, mit einem Unterdruck beaufschlagt, um einen unter dem Umgebungsdruck (1 bar Absolutdruck) liegenden Druck im Innenraum I bereitzustellen. Weiterhin ist es bevorzugt, wenn auch auf der Außenseite des Kunststoffbehälters 3 ein ähnlicher Druck, bevorzugt ein gleich großer Druck herrscht, wie im Innenraum des Kunststoffbehälters 3, um ein Kollabieren des Kunststoffbehälters 3 zu verhindern. Vor dem schlussendlichen Evakuieren des Innenraumes I vor der Befüllung des Kunststoffbehälters können noch weitere Schritte, beispielsweise Spülschritte, durchgeführt werden, um im Innenraum I eine definierte Atmosphäre bereitzustellen. Hierzu kann beispielsweise der Innenraum I des Kunststoffbehälters 3 zumindest ein Mal evakuiert werden, und dann wieder mit einem definierten Gas, beispielsweise einem Inertgas, wie CO₂ beaufschlagt werden, um dann nach dem erneuten Evakuieren vor dem Befüllen sicherzustellen, dass das sich im Kunststoffbehälter 3 befindliche Restgas nur noch zu einem geringen Anteil oder praktisch überhaupt keinen Sauerstoff mehr aufweist.

Beim Einbringen des unter einem Uberdrück stehenden Füllprodukts in den unter einem Unterdruck stehenden Innenraum I schießt das Füllprodukt schlagartig in den Innenraum I herein, so dass mit einer sehr hohen Geschwindigkeit gefüllt werden kann. Nachdem sich das Füllprodukt im Kunststoffbehälter 3 beruhigt hat, kann der Kunststoffbehälter 3 in seinem Innenraum I genauso wie in dem Außenbereich O wieder entlastet werden und auf Umgebungsdruck gebracht werden. Danach kann die Blasform 2 geöffnet werden und der Kunststoffbehälter 3 entnommen werden. Wenn in den Kunststoffbehälter 3 stille Füllprodukte eingebracht werden, so kann er nach dem Abfüllvorgang direkt entlastet werden. Wenn die Füllprodukte jedoch kohlensäurehaltig sind, so muss eine ausreichend lange Beruhigungszeit vorgesehen sein, um ein Beruhigen der Flüssigkeit zu ermöglichen. Alternativ kann der Kunststoffbehälter 3, so wie beispielsweise in Figur 5 gezeigt, direkt nach dem Befüllen und bevorzugt einem Beaufschlagen mit einem Vorspanndruck noch in der Blasform verschlossen werden.

In einem weiteren bevorzugten Ausführungsbeispiel kann der Preform 30 in die Blasform 2 eingebracht werden und dann bereits zu diesem Zeitpunkt der Außenraum O, also der Raum zwischen dem Preform 30 und der Innenwand 22 der Kavität 20 der Blasform 2 evakuiert werden, so dass ein vorbestimmter Unterdruck bereitsteht. Auf diese Weise kann der Blasvorgang beziehungsweise Blasformvorgang beschleunigt werden oder aber es kann der auf den Innenraum I aufzubringende Druck zum Blasformen reduziert werden. Dies ist vorteilhaft, da dann weniger Druckluft benötigt wird und der Blasprozess damit insgesamt effizienter wird.

Nach dem Ausformen der Konturen des Kunststoffbehälters 3 unter dem entsprechenden Überdruck auf der Innenseite I des Kunststoffbehälters 3 wird dann der Innenraum I ebenfalls evakuiert, so dass im Innenraum I des Kunststoffbehälters 3 sowie im Außenraum O zwischen der Außenwand 300 des Kunststoffbehälters 3 und der Innenwand 22 der Kavität 20 der Blasform 2 entsprechend ähnliche beziehungsweise gleiche Druckbedingungen vorherrschen. Auf diese Weise kann verhindert werden, dass auch bei einem Evakuieren des Innenraums I der Kunststoffbehälter 3 weder beschädigt wird, noch kollabiert.

In dem oben gezeigten Ausführungsbeispiel wird das Füllprodukt über eine separate Fülldüse 5 in den Kunststoffbehälter 3 eingebracht. Die Fülldüse 5 und die Blasdüse 4 können jedoch auch kombiniert sein. Insbesondere kann über die Blasdüse 4, mittels welcher der Überdruck zum Blasen des Kunststoffbehälters 3 aufgebracht wird, auch der Unterdruck, das Füllprodukt sowie gegebenenfalls das Spanngas aufgebracht werden. Entsprechend kann das kombinierte Blas/Füllproduktventil dann in seiner Position verbleiben und keine Zeit wird zum Wechseln zwischen dem Blasventil und dem Füllproduktventil benötigt, so dass der gesamte Vorgang beschleunigt werden kann.

Wenn die Blasdüse gleichzeitig als Füllproduktdüse verwendet wird, kann auch eine herkömmliche Blasmaschine verwendet werden, die um die oben beschriebene Vakuumvorrichtung erweitert ist, um eine Evakuierung des fertig ausgebildeten Kunststoffbehälters 3 zu ermöglichen und welche weiterhin um eine Füllproduktzuführung erweitert ist, mittels welcher das Füllprodukt zugeführt werden kann. Dabei ist jedoch zu beachten, dass die Blasform 2 so druckdicht ausgebildet sein muss, dass sie die Bereitstellung des Vakuums auf der Außenseite O zwischen der Behälterwand 300 und der Innenwand 22 der Kavität 20 der Blasform 2 ermöglicht.

Der Druck auf der Außenseite O kann auf unterschiedliche Weise bereitgestellt werden. Beispielsweise kann er im Bereich der Behältermündung direkt an der Blasformwandung anliegen und der Unterdruck wird durch eine Absaugung im Bereich der Behältermündung, also an einer ähnlichen Stelle wie der Unterdruck, der auf der Innenseite I des Kunststoffbehälters bereitgestellt werden muss, aufgebracht werden. Der Unterdruck auf der Innenseite I des Kunststoffbehälters 3 sowie auf der Außenseite O des Kunststoffbehälters 3 wird bevorzugt durch die gleiche Einrichtung erreicht, beispielsweise dann über die Blasdüse. Durch eine Verbindung wird auf der Innenseite I sowie auf der Außenseite O der gleiche Druck bereitgestellt.

Weiterhin können aber auch, wie in den Figuren oben gezeigt, im Bereich der Blasformwand 22 Bohrungen, wie beispielsweise der Druckausgleichskanal 28 vorgesehen sein, welche beim Evakuieren des Innenraums I ebenfalls mit einer Vakuumvorrichtung 6 verbunden werden können und entsprechend auch hier das gleiche Druckniveau auf der Innenseite I wie auf der Außenseite O erzeugen, um ein Kollabieren des Kunststoffbehälters 3 zu verhindern.

Die im Innenraum I und im Außenraum O erzeugten Drücke können voneinander isoliert sein, so wie in dem obigen Ausführungsbeispiel, derart, dass sie nicht kommunizierend ausgebildet sind. Über eine entsprechende Ansteuerung kann jedoch erreicht werden, dass die getrennt einstellbaren Drücke auf der Innenseite I und der Außenseite O gleich sind.

Die Drücke können auch über den gesamten Füllvorgang hinweg gleich gehalten werden, wenn beispielsweise über ein empfindliches Überdruckventil dafür gesorgt wird, dass das sich im Kopfraum ansammelnde Restgas verdrängt wird, so dass trotz des Füllvorganges und des sich auffüllenden Volumens im Kunststoffbehälter 3 der Druck im Kunststoffbehälter im Wesentlichen gleich bleibt.

Weiterhin ist es aber auch bevorzugt, dass sich beim Befüllen im Innenraum I ein relativer Überdruck gegenüber dem Außenraum O ausbildet, so dass die Behälterwand 300 nach außen gepresst wird, wodurch auch im Außenraum O eine Druckänderung stattfinden kann. Ein Überdruck im Kunststoffbehälter 3 kann beispielsweise auch zur Bestimmung des Füllendes verwendet werden, wenn der Druck entsprechend gemessen wird und damit bei Erreichen eines vorgegebenen Druckes, welcher den Ausgangsdruck im Innenraum I berücksichtigt, der Befüllvorgang beendet wird.

Um ein Anbacken beziehungsweise Festhaften der Behälterwand 300 an der Innenwand 22 der Kavität 20 der Blasform 2 zu verhindern, sind mehrere weitere Möglichkeiten vorgesehen. Beispielsweise kann die Blasform und insbesondere die Außenseite O zwischen Preform 30 und Innenwand 22 direkt nach Einführen des Preforms 30 evakuiert werden, so dass der entsprechende Unterdruck bereits vor Beginn des Blasvorganges beziehungsweise des Streckblasvorganges anliegt. Auf diese Weise kann der Blasvorgang effizienter durchgeführt werden. Eine Drucksteuerung kann dann über die Blasdüse und/oder über entsprechende Zugänge, beispielsweise Bohrungen oder Kanäle in der Innenwand 22 der Blasform erreicht werden. In einer Variante kann die Drucksteuerung allein über die Blasdüse erreicht werden, welche durch eine entsprechende Anordnung des Preform sowohl auf den Innenraum I als auch den Außenraum O wirken kann

In einer Alternative kann der Unterdruck auf der Außenseite O des Kunststoffbehälters 3 erst nach dessen Ausformung angelegt werden, wobei hier wiederum die Drucksteuerung entweder über separate Druckkanäle in der Blasform oder über die Blasdüse selbst durchführbar ist.

Das Verfahren kann dabei beispielsweise so durchgeführt werden, dass eine Blasdüse 5 auf die geschlossene und mit einem Preform 30 versehene Blasform 2 aufgesetzt wird. Danach wird der Blasformvorgang auf bekannte Weise durchgeführt. Nach dem Ausformen des Kunststoffbehälters 3 wird an die Blasdüse 5 entsprechend ein Unterdruck angelegt, um den Kunststoffbehälter 3 zu evakuieren. Dadurch löst sich der Kunststoffbehälter 3 leicht von der Innenwand 22 der Blasform 2 ab, da in einem solchen Fall kein Druckgleichgewicht vorliegt. Entsprechend zieht sich der Kunststoffbehälter 3 leicht zusammen, so dass er sich von der Innenwand 22 der Blasform 2 ablöst. Nach diesem Ablösen muss allerdings in dem Außenraum O ein Unterdruck angelegt werden, und zwar im Wesentlichen der gleiche wie auf dem Innenraum I, um ein Druckgleichgewicht herzustellen und dann weitere Deformationen zu vermeiden. Danach kann das Füllverfahren so wie oben beschrieben durchgeführt werden, nämlich durch das Einführen von Füllprodukt in den evakuierten Innenraum I des Kunststoffbehälters 3.

Am Ende des Füllvorganges kann dann der im Außenraum O anliegende Unterdruck beispielsweise durch Belüften wieder abgebaut werden. Dabei kann der sich im Kopfraum des Kunststoffbehälters 3 ausgebildete Überdruck erhalten werden. In einer Alternative kann aber auch der sich im Kopfraum des Kunststoffbehälters 3 durch den Befüllvorgang ausgebildete Überdruck auch in den Außenraum O geleitet werden, wobei mittels des Überdrucks dann ein Ablösen der Behälterwand 300 von der Innenwand 22 der Blasform 2 zu unterstützen. Beim Befüllen des Kunststoffbehälters 3 entsteht ein leichter Überdruck, so dass die ursprüngliche Behälterform wieder hergestellt wird. Entsprechend kann hier der Vorteil des schnellen Füllens in das Vakuum kombiniert werden mit einem vollständigen Ausformen des Kunststoffbehälters 3 an der Blasformwand und gleichzeitig ein gutes Ablösen von der Blasformwand zu kombinieren. Die ursprüngliche Form kann auch darüber hergestellt werden, dass ein zusätzlicher Druck in den Kunststoffbehälter 3 eingebracht wird.

Die Druckverhältnisse im Außenraum O können durch die entsprechenden Zuführungskanäle ebenfalls gesteuert vorgenommen werden, so dass ein Anbacken der Behälterwand 300 an der Blasformwand 22 dadurch verhindert werden kann, dass der Unterdruck auf der Außenseite O nicht so hoch eingestellt wird wie innen, so dass ein leichtes Zusammenziehen des Kunststoffbehälters 3 resultiert. Weiterhin kann zu gegebenen Prozesszeitpunkten auch aktiv zusätzliches Gas durch die Zuführungen in der Blasformwand hindurch gegeben werden. In beiden Varianten wird erreicht, dass sich der Kunststoffbehälter 3 leicht zusammenzieht, so dass ein leichtes Ablösen bereitgestellt wird.

Um ein leichtes Ablösen des Kunststoffbehälters 3 aus der Form zu erreichen, kann weiterhin bevorzugt ein Luftpolster in dem Außenbereich O, also zwischen der Blasformwand 22 und der Behälterwand 300 ausgebildet werden. Das Luftpolster, also der leichte Überdruck, soll so ausgebildet sein, dass eine sichtbare Deformation des Kunststoffbehälters 3 nicht stattfindet, aber ein Luftpolster beziehungsweise Luftlager erzeugt wird, um ein Anbacken des Kunststoffbehälters 3 zu verhindern. Dieses Luftpolster kann zu verschiedenen Prozesszeitpunkten eingestellt werden, wobei je nach Behälterform und verwendetem Material ausreichend sein kann, das Luftpolster erst kurz vor dem Öffnen der Blasform 2 zu erzeugen, um das Lösen des Kunststoffbehälters 3 aus der Blasform 2 zu vereinfachen.

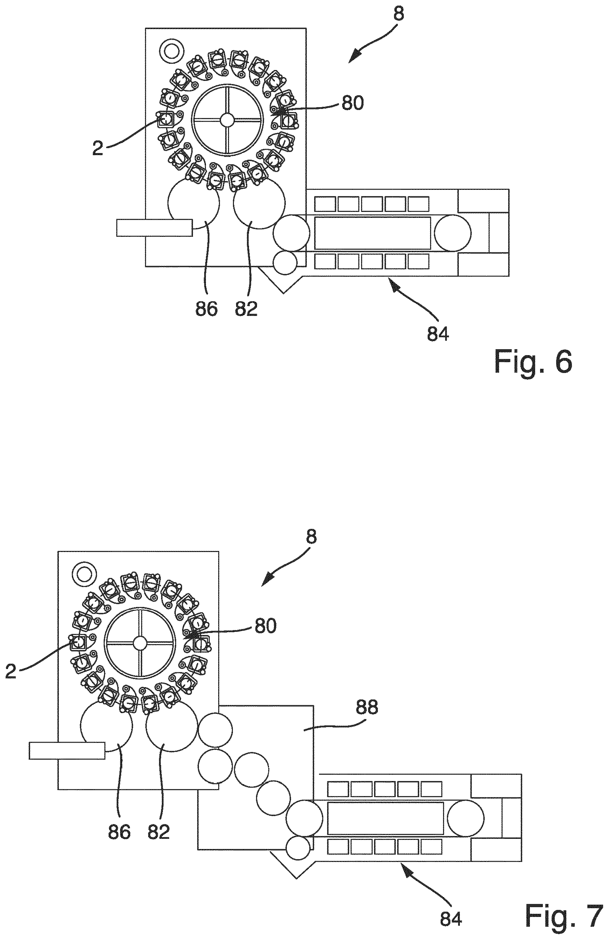

In Figur 6 ist eine schematische Draufsicht auf eine Streckblasmaschine 8 zu sehen, wobei einzelne Blasformen 2, beispielsweise so wie in den obigen Ausführungsbeispielen beschrieben, in einem Rundläuferkarussell 80 angeordnet sind und entsprechend umlaufen. Über einen Einlaufstern 82 werden Preforms aus einem Heizmodul 84 den einzelnen Blasformen 2 im Rundläuferkarussell 80 zugeführt. Über einen Auslaufstern 86 werden die fertig geblasenen und befüllten Kunststoffbehälter wieder ausgeschleust und der weiteren Verarbeitung zugeführt. Auf dem Rundläuferkarussell 80 werden die einzelnen Blasformen 2 entsprechend, so wie in den vorherigen Ausführungsbeispielen beschrieben, mit dem Füllprodukt befüllt, wobei vor der Befüllung des jeweiligen Kunststoffbehälters mit dem Füllprodukt der Kunststoffbehälter evakuiert wird, so dass ein schnelles Füllen in den auf diese Weise evakuierten Kunststoffbehälter stattfinden kann. Gleichzeitig wird de Kunststoffbehälter 3 durch den im Außenraum O angelegten Unterdruck stabilisiert. Entsprechend kann mit einer relativ geringen Anzahl an Blasformen 2 auf dem Rundläuferkarussell 80 eine hohe Leistung erzielt werden. Auf einen nachgelagerten, separaten Füller kann so verzichtet werden.

In Figur 7 ist eine weitere Ausführungsform der Streckblasmaschine 8 gezeigt, bei welcher zwischen dem Heizmodul 84 zusätzlich ein Entkeimungsmodul 88 vorgesehen ist, mittels welchem die in dem Heizmodul 84 auf Verarbeitungstemperatur gebrachten Preforms entkeimt werden können, bevor sie in die jeweiligen Kavitäten der Blasformen 2, welche wiederum in einem Rundläuferkarussell 80 angeordnet sind, eingebracht werden. Entsprechend kann ein steriles Abfüllen des Füllproduktes auf dem Rundläuferkarussell 80 nach dem Ausformen der jeweiligen Kunststoffbehälter in den Blasformen in der oben beschriebenen Weise erreicht werden.

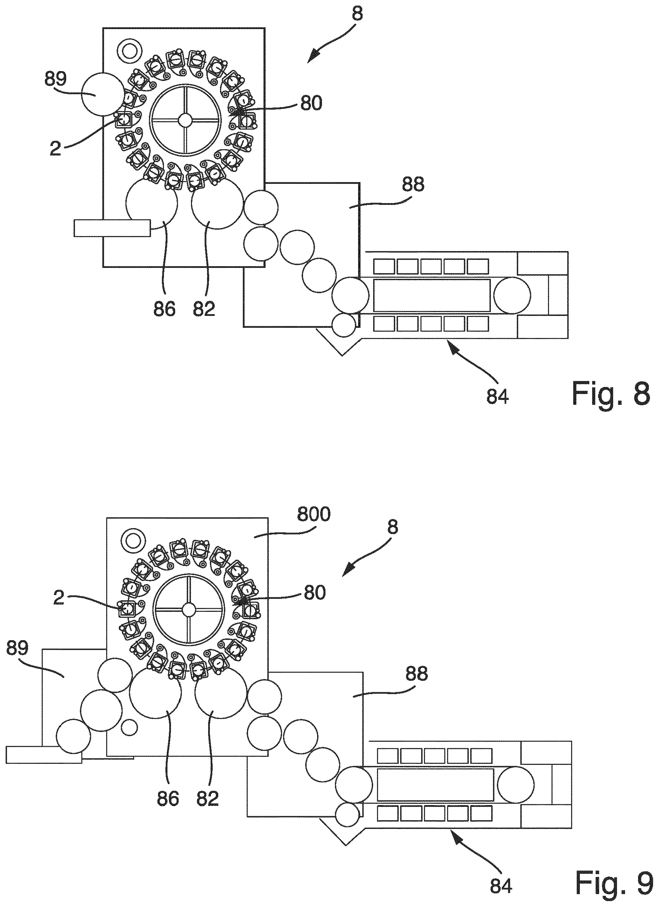

In Figur 8 ist noch eine weitere Ausführungsform einer Streckblasmaschine 8 gezeigt, wobei sowohl das Heizmodul 84 als auch das Entkeimungsmodul 88 vorgesehen sind. Zusätzlich ist an dem Rundläuferkarussell 80 ein Verschließer 89 vorgesehen, mittels welchem es möglich ist, die in dem Füllerkarussell 80 geblasenen und mit dem Füllprodukt befüllten Kunststoffbehälter auch mit einem Behälterverschluss zu versehen. Entsprechend wird auf dem Rundläuferkarussell 80 sowohl der Kunststoffbehälter hergestellt, indem in der Blasform 2 die in dem Heizmodul 84 aufgeheizten und im Entkeimungsmodul 88 entkeimten Preforms zu Kunststoffbehältern geblasen werden. Weiterhin wird auf dem Rundläuferkarussell dann in den evakuierten Kunststoffbehälter hinein das Füllprodukt gefüllt, derart, dass eine sehr schnelle und schlagartige Befüllung ermöglicht wird. Weiterhin wird am Verschließer 89 ebenfalls noch auf dem Rundläuferkarussell 80 ein Verschließen der Kunststoffbehälter durchgeführt.

Entsprechend kann ein schnelles Befüllen kombiniert werden mit einem Verschließen der Kunststoffbehälter, solange diese noch in der Blasform 2 angeordnet sind. Damit kann auch ein Befüllen der Kunststoffbehälter mit einem karbonisierten Füllprodukt effizient auch dann durchgeführt werden, wenn das karbonisierte Füllprodukt in den im Kunststoffbehälter vorgesehenen Unterdruck eingefüllt wird.

Die Verschlüsse in der Verschlusszuführung zu dem Verschließer 89 in Figur 8 werden in eine Vakuumkammer zugeführt, derart, dass die Verschlüsse über eine Schleuse in die Vakuumkammer zugeführt werden. Entsprechend kann auch ein Verschließen mit den Verschlüssen unter Vakuum stattfinden.

Mit anderen Worten kann der Verschließer 89 ein Verschließen der befüllten Kunststoffbehälter ermöglichen, ohne dass der Innenraum des Kunststoffbehälters auf Umgebungsdruck entlastet werden würde. Damit kann ein Verschließen des befüllten Kunststoffbehälters 3 bei Druckbedingungen erreicht werden, die den Druckbedingungen beim Abfüllen oder beim nachfolgenden Beaufschlagen mit Spanngas entsprechen.

In Figur 9 ist eine weitere Ausführungsform einer Streckblasmaschine 8 gezeigt, wobei hier wiederum das Heizmodul 84 und das Entkeimungsmodul 88 dafür sorgen, dass über den Einlaufstern 82 aufgeheizte und entkeimte Preforms den jeweiligen Blasformen 2, welche am Rundläuferkarussell 80 angeordnet sind, zugeführt werden. Auf dem Rundläuferkarussell 80 wird nicht nur der Kunststoffbehälter hergestellt, sondern er wird auch vollständig mit dem Füllprodukt befüllt. Ein in diesem Beispiel hinter dem Auslaufstern 86 liegender Verschließer 89 sorgt dafür, dass die fertig befüllten Kunststoffbehälter, welche aus den Blasformen 2 ausgeformt wurden und über den Auslaufstern 86 ausgeschleust wurden, dann im Verschließer 89 sofort verschlossen werden.

Der Verschließer befindet sich dabei bevorzugt auf der Plattform 800 der Streckblasmaschine 8, so dass eine besonders kompakte und in sich geschlossene Gesamtvorrichtung ausgebildet werden kann.

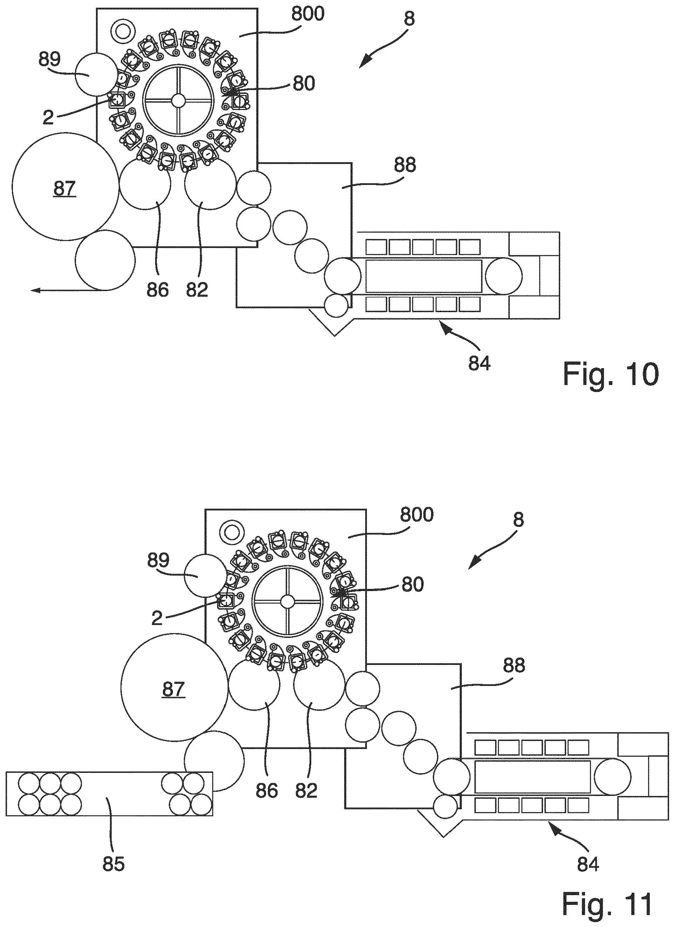

In Figur 10 ist noch eine weitere Ausführungsform eines Aufbaus der Streckblasmaschine 8 gezeigt, wobei wiederum ein Aufheizen der Preforms in dem Heizmodul 84, ein nachfolgendes Entkeimen im Entkeimungsmodul 88, ein Zuführen über den Einlaufstern 82 auf das Rundläuferkarussell 80 mit den Blasformen 2 stattfindet, so dass ein Füllen des Füllprodukts in die in den Blasformen 2 hergestellten Kunststoffbehälter auf dem Rundläuferkarussell 80 stattfinden kann, und ebenfalls ein Verschließen mit dem Verschließer 89, welcher ebenfalls am Rundläuferkarussell 80 so angeordnet ist, dass die sich noch in den Blasformen 2 befindlichen, mit dem Füllprodukt befüllten Kunststoffbehälter mit einem Behälterverschluss verschlossen werden können. Weiterhin ist ein Etikettiermodul 87 vorgesehen, welches die geblasenen, befüllten und verschlossenen Kunststoffbehälter über den Auslaufstern 86 übernimmt und entsprechend etikettiert. In einer besonders bevorzugten Ausbildung findet auch die Etikettierung noch im Rundläuferkarussell 80 statt, nämlich sofort nach dem Ausformen der befüllten Kunststoffbehälter.

In Figur 11 ist eine weiterführende Ausbildung der in Figur 10 gezeigten Vorrichtung zu sehen, wobei hier zusätzlich ein Transportband 85 vorgesehen ist, auf welchem die hergestellten, befüllten, verschlossenen und etikettierten Kunststoffbehälter weiter transportiert werden. Auf dem Transportband 85 können die Kunststoffbehälter über einen Teilungsverzugstern aufgegeben werden und entsprechend in zwei oder einer Mehrzahl von Reihen nebeneinander transportiert werden.

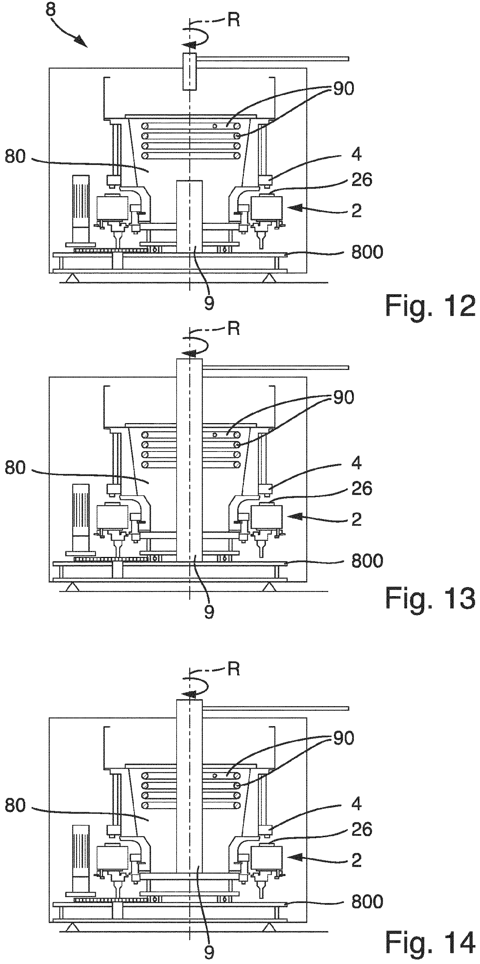

In Figur 12 ist schematisch eine Querschnittsansicht durch die Streckblasmaschine 8 gezeigt, wobei die Blasformen 2 an dem Karussell um eine Rotationsachse R herum umlaufend rotierbar gehalten sind. Über den Blasformen 2 sind Blasdüsen 4 angeordnet, welche auf einen entsprechenden Einlassbereich 26 der Blasform 2 abgesenkt werden können, um entsprechend eine druckdichte Verbindung zum Blasen, zum Evakuieren und zum Beaufschlagen der Kunststoffbehälter mit Füllprodukt bereitzustellen.

Ein Mediendrehverteiler 9 mit einer Vielzahl von Verteilspuren 90 ist vorgesehen, wobei der Mediendrehverteiler auf der Plattform 800 der Streckblasmaschine 8 steht und die Verteilspuren 90 entsprechend am Rundläuferkarussell 80 angeordnet sind. Mit dem Mediendrehverteiler 90 kann sowohl eine Temperierflüssigkeit zum Temperieren der Blasformen 2 als auch das Füllprodukt von dem stehenden Teil der Streckblasmaschine 8 auf den rotierenden Teil verteilt werden. Über den Medienverteiler 9 kann weiterhin auch Druckluft beziehungsweise Vakuum vom stehenden Teil auf den drehenden Teil übergeben werden. Weiterhin können auf diese Weise auch andere Medien, Strom oder Steuersignale übergeben werden.

In Figur 13 ist eine weitere Ausführung gezeigt, bei welcher der Medienverteiler 9 durchgehend ausgebildet ist. Mittels des Mediendrehverteilers können sämtliche Medien vom stehenden Teil auf den rotierenden Teil übertragen werden. Der Mediendrehverteiler 9 kann dabei entweder auf der Plattform 800 angeordnet sein, so wie in Figur 13 gezeigt, oder aber mit dem Blasrad beziehungsweise dem Rundläuferkarussell 80 rotieren, wie in Figur 14 gezeigt.

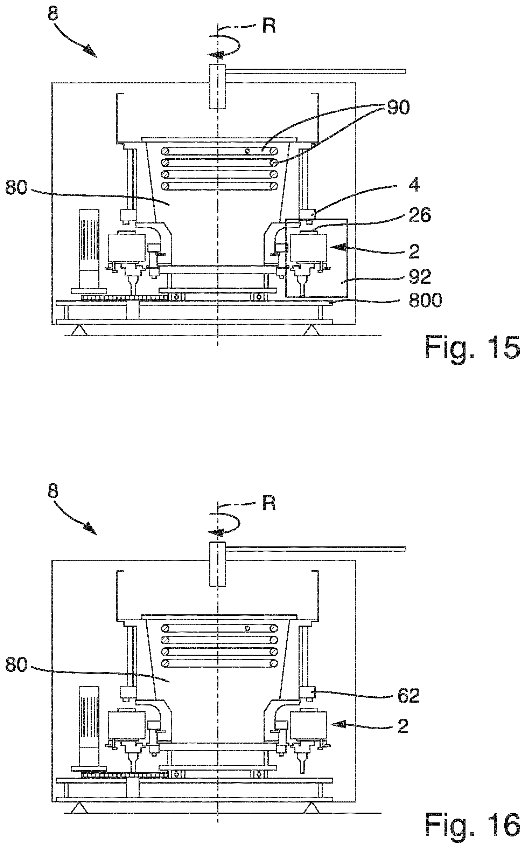

In Figur 15 ist eine weitere Ausbildung der Streckblasmaschine 8 gezeigt, wobei hier jede Blasform 2 beziehungsweise das ganze Rundläuferkarussell 80 in einem Isolator 92 angeordnet sind, wobei die Preforms in den Isolator hereingebracht werden und die befüllten Kunststoffbehälter aus dem Isolator ausgetragen werden, wobei entsprechend eine Schleuse vorgesehen ist, derart, dass in dem Isolator 92 ein konstanter Unterdruck aufrecht erhalten werden kann.

In Figur 16 ist eine schematische Darstellung der Streckblasmaschine 8 gezeigt, bei welcher es über eine Vakuumleitung 62 möglich ist, den Zwischenraum zwischen Behälterwand und Innenwand der Kavität der Blasform 2 zu evakuieren. Dieses Evakuieren kann entweder bereits direkt nach dem Einbringen der Preform stattfinden, oder aber erst nach dem vollständigen Herstellen des Kunststoffbehälters.

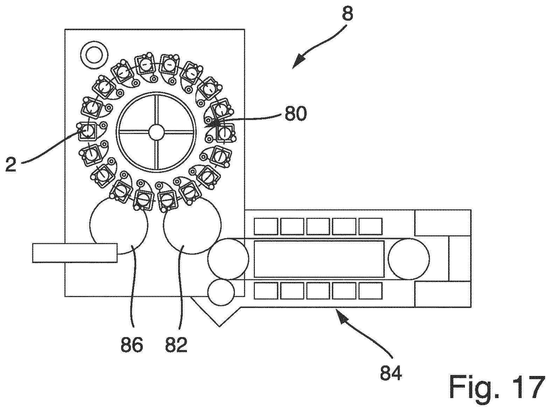

In Figur 17 ist schematisch ein besonders kompakter Aufbau einer Streckblasmaschine 8 gezeigt, wobei das Rundläuferkarussell 80 so ausgebildet ist, dass die Blasformen 2 jeweils mindestens zwei Umläufe benötigen, um sowohl den Streckblasvorgang zur Herstellung des zu befüllenden Kunststoffbehälters, als auch den Befüllvorgang und eventuell auch den Verschließvorgang sowie Etikettiervorgang durchführen zu können. Hierzu ist die Anzahl der Blasformen bevorzugt ungerade und es wird jeweils jede zweite Blasform mit einem Preform bestückt und entsprechend nach entsprechendem zweimaligem Umlauf der fertige Kunststoffbehälter wieder entnommen. Der Versatz kann entsprechend durch das Bereitstellen einer ungeraden Anzahl an Blasformen 2 erreicht werden.

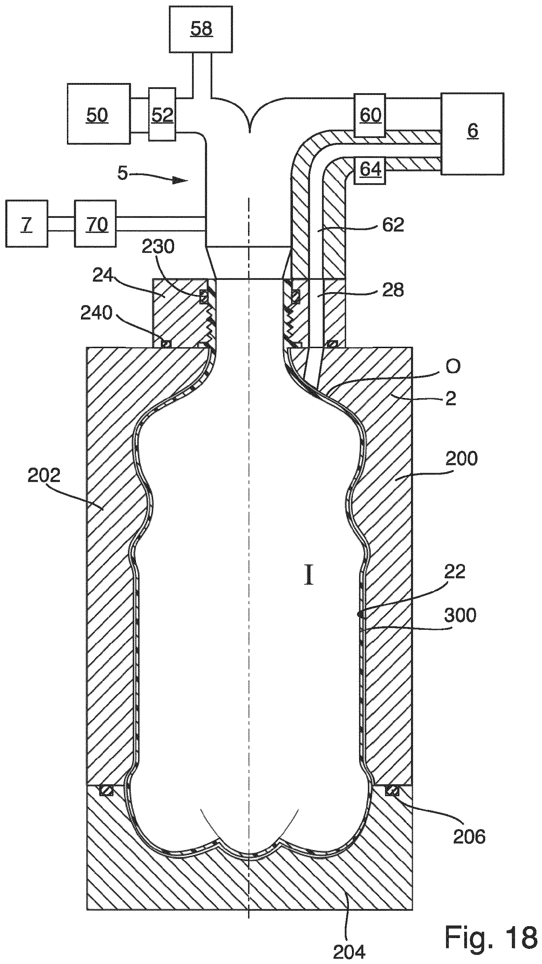

In Figur 18 ist eine weitere Ausführungsform auf Basis der bereits zu den Figuren 1 bis 4 beschriebenen Vorrichtung 1 gezeigt. Zusätzlich zu den in Figur 4 vorgesehenen Merkmalen ist ein Aromadosierer 58 vorgesehen, mittels welchem Aromen und/oder Getränkezusätze und/oder Getränkekomponenten in den Innenraum I des Kunststoffbehälters 3 eindosiert werden können. Unter Getränkezusätzen werden hier auch Sirup und/oder Konservierungsstoffe verstanden.

In dem gezeigten Ausführungsbeispiel mündet der Aromadosierer 58 in die Fülldüse 5, so dass das zugeführte Aroma und/oder der Getränkezusatz und/oder die Getränkekomponente über den gleichen Weg in den Kunststoffbehälter 3 gelangt, wie das von der Füllproduktzuführung 50 zugeführte Füllprodukt.

Der Aromadosierer 58 mündet in dem gezeigten Ausführungsbeispiel stromabwärts des Füllproduktventils 52 in die Fülldüse 5, so dass ein Zudosieren von Aromen und/oder Getränkezusätzen und/oder Getränkekomponenten auch bei geschlossenem Füllproduktventil 52 stattfinden kann. Das Zudosieren kann daher vor dem Einbringen des Füllprodukts aus der Füllproduktzuführung 50, während des Einfüllens des Füllprodukts oder nach Abschluss des Füllvorgangs durchgeführt werden. Das Eindosieren nach dem Abschluss des Füllvorgangs und nach einem Beruhigen des Füllprodukts in dem Kunststoffbehälter 3 ist hierbei bevorzugt.

Der Aromadosierer 58 kann dabei beispielsweise in Form einer Schlauchpumpe ausgebildet sein, mittels welcher ein genaues Dosieren des jeweiligen Aromas beziehungsweise des jeweiligen Getränkezusatzes beziehungsweise der jeweiligen Getränkekomponente aus einem entsprechenden Reservoir möglich ist.

Es können auch mehrere Aromadosierer 58 vorgesehen sein oder mittels eines Aromadosierers 58 wahlweise unterschiedliche Aromen und/oder Getränkezusätze und/oder Getränkekomponenten zugeführt werden, so dass der oder die Aromadosierer 58 so eingerichtet sind und angesteuert werden können, dass für jeden individuellen Füllvorgang eine andere Aromakonzentration und/oder Getränkezusatzkonzentration und/oder Getränkekomponentenkonzentration und/oder Zusammensetzung an Aromen und/oder Getränkezusätzen und/oder Getränkekomponenten gewählt werden kann. Im regulären Füllbetrieb werden jedoch aus Gründen des Betriebsablaufs üblicher Weise zunächst Chargen einer ersten Geschmacksrichtung abgefüllt, bevor es zu einem Wechsel der Geschmacksrichtung kommt. Entsprechendes gilt für einen Wechsel zwischen Getränketypen wie beispielsweise zwischen Getränken mit Fruchtfasern und Getränken ohne Fruchtfasern.

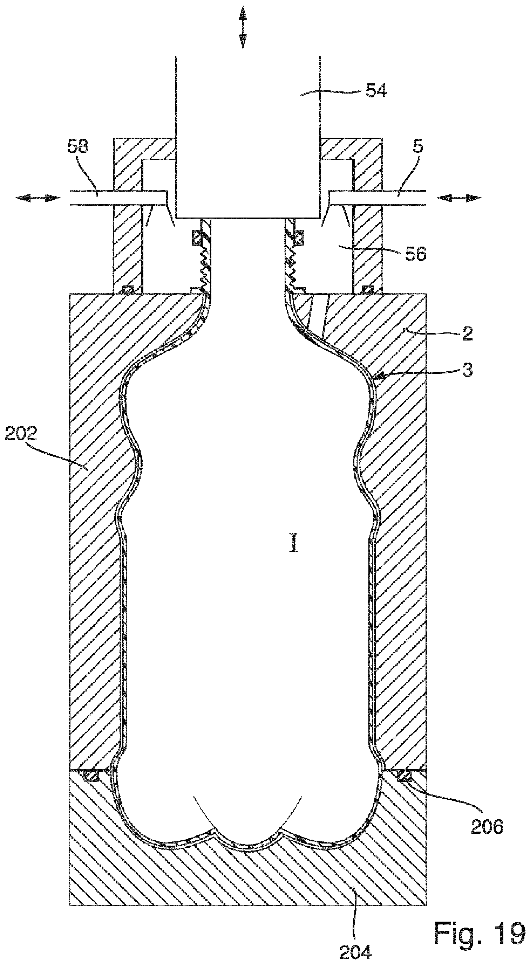

In Figur 19 ist eine weitere Ausführungsform auf Basis des in Figur 5 gezeigten Ausführungsbeispiels gezeigt. Zusätzlich zu der schematisch angedeuteten und verschiebbaren oder verschwenkbaren Fülldüse 5 ist im Verschließerraum 56 auch der Zulauf eines Aromadosierers 58 vorgesehen.

Der Aromadosierer 58 wird über der Mündung des Kunststoffbehälters 3 positioniert, um Aromen und/oder Getränkezusätzen und/oder Getränkekomponenten in den Innenraum I des Kunststoffbehälters 3 zu dosieren. Dabei kann der Aromadosierer 58 vor dem Befüllen des Kunststoffbehälters 3 mit dem Füllprodukt oder nach Abschluss des Füllvorgangs über der Mündung positioniert werden. Die Fülldüse 5 und der Aromadosierer 58 wechseln sich entsprechend in ihrer Position über der Mündung des Kunststoffbehälters 3 ab.

### Bezugszeichenliste

- 1: Vorrichtung zum Herstellen eines Kunststoffbehälters und zum Befüllen
- 2: Blasform
- 20: Kavität
- 22: Innenwand
- 24: Halshalterung
- 26: Einlassbereich
- 28: Druckausgleichskanal
- 200: seitliches Blasformteil
- 202: seitliches Blasformteil
- 204: Blasformboden
- 206: Dichtung
- 230: Halsdichtung
- 240: Halshalterungsdichtung
- 3: Kunststoffbehälter
- 30: Preform
- 32: Mündungsbereich
- 34: Tragring
- 300: Behälterwand
- 4: Blasdüse
- 40: Reckstange
- 42: Blasmedienkanal
- 5: Fülldüse
- 50: Füllproduktzuführung
- 52: Füllproduktventil
- 54: Verschließer
- 56: Verschließerraum
- 58: Aromadosierer
- 6: Vakuumvorrichtung
- 60: Vakuumventil
- 62: Vakuumleitung
- 64: Druckausgleichsventil
- 7: Spanngasvorrichtung
- 70: Spanngasventil
- 8: Streckblasmaschine
- 80: Rundläuferkarussell
- 82: Einlaufstern
- 84: Heizmodul
- 85: Transportband
- 86: Auslaufstern
- 87: Etikettiermodul
- 88: Entkeimungsmodul
- 89: Verschließer
- 800: Plattform
- 9: Mediendrehverteiler
- 90: Verteilspur
- 92: Isolator
- S: seitliche Richtung
- A: Abwärtsrichtung
- I: Innenraum
- O: Außenraum
- R: Rotationsachse

## Patentansprüche

1. Verfahren zur Herstellung eines Kunststoffbehälters sowie zu dessen Befüllung mit einem Füllprodukt, umfassend das Einbringen eines Preforms (30) in eine Blasform (2) und das Beaufschlagen des Preforms (30) mit einem Blasmedium zum Herstellen eines Kunststoffbehälters (3),
**dadurch gekennzeichnet, dass**
vor dem Einfüllen des Füllprodukts in den fertig geblasenen Kunststoffbehälter (3) der Innenraum (I) des in der Blasform (2) aufgenommenen Kunststoffbehälters (3) auf einen Unterdruck bei einem Absolutdruck von 0,5 bar bis 0,05 bar evakuiert wird und ein unter Überdruck oder Umgebungsdruck stehendes Füllprodukt in den unter Unterdruck stehenden Innenraum (I) des Kunststoffbehälters (3) eingeleitet wird, so dass bei der Befüllung mit dem Füllprodukt kein Fluid durch das Füllprodukt verdrängt wird und entsprechend auch kein Fluid aus dem Innenraum des Kunststoffbehälters (3) ausströmt.

2. Verfahren gemäß Anspruch 1, **dadurch gekennzeichnet, dass** der Kunststoffbehälter (3) vor dem Einleiten des Füllprodukts auf einen Unterdruck bei einem Absolutdruck von 0,3 bar bis 0,1 bar, bevorzugt von 0,1 bar, evakuiert wird,
und/oder das Füllprodukt unter einem Überdruck oder Umgebungsdruck mit einem Absolutdruck von 1 bar bis 9 bar bereitgestellt wird, bevorzugt unter einem Absolutdruck von 2,5 bar bis 6 bar, besonders bevorzugt unter einem Absolutdruck von 2,8 bar bis 3,3 bar.

3. Verfahren gemäß Anspruch 1 oder 2, **dadurch gekennzeichnet, dass** das Füllprodukt unter einem Umgebungsdruck bereit gestellt wird, bevorzugt unter einem Absolutdruck von 1 bar, oder unter einem Überdruck, der dem Sättigungsdruck des Füllprodukts entspricht, bereit gestellt wird, bevorzugt bei einem Absolutdruck von 1,1 bar bis 6 bar, oder unter einem Überdruck, der über dem Sättigungsdruck des Füllprodukts liegt, bereit gestellt wird, bevorzugt unter einem Absolutdruck von 1,6 bar bis 9 bar.

4. Verfahren gemäß einem der vorstehenden Ansprüche, **dadurch gekennzeichnet, dass** der befüllte Kunststoffbehälter (3) nach dem Einleiten des Füllprodukts mit einem Spanngas unter einem Absolutdruck von 2 bar bis 9 bar beaufschlagt wird, bevorzugt unter einem Absolutdruck von 3,5 bar bis 7 bar, besonders bevorzugt unter einem Absolutdruck von 3,8 bar bis 5,5 bar.

5. Verfahren gemäß einem der vorstehenden Ansprüche, **dadurch gekennzeichnet, dass** der zwischen Preform (30) und/oder Kunststoffbehälter (3) und einer Innenwand (22) der Kavität (20) der Blasform (2) definierte Außenraum (O) vor dem Beaufschlagen des Preforms (30) mit dem Blasmedium, vor dem Evakuieren des Innenraums (I) des Kunststoffbehälters (3) und/oder vordem Einleiten des Füllprodukts in den Innenraum (I) des Kunststoffbehälters (3) auf einen Unterdruck evakuiert wird.

6. Verfahren gemäß Anspruch 5, **dadurch gekennzeichnet, dass** der Außenraum (O) auf einen Unterdruck bei einem Absolutdruck von 0,5 bar bis 0,05 bar, bevorzugt 0,3 bar bis 0,1 bar, besonders bevorzugt von 0,1 bar, evakuiert wird,
und/oder vordem Einleiten des Füllprodukts in den Innenraum (I) des Kunststoffbehälters (3) der Druck im Innenraum (I) und im Außenraum (O) angeglichen wird,
und/oder der Druck im Innenraum (I) des Kunststoffbehälters (3) vordem Einleiten des Füllproduktes geringer ist, als der Druck im Außenraum (O), um den Kunststoffbehälter (3) von der Innenwand (22) der Kavität (20) der Blasform (2) zu lösen.

7. Verfahren gemäß einem der vorstehenden Ansprüche, **dadurch gekennzeichnet, dass** der Kunststoffbehälter (3) nach dem Einleiten des Füllprodukts mit einem unter Überdruck stehenden Spanngas beaufschlagt wird,
und/oder der Kunststoffbehälter (3) nach dem Einleiten des Füllproduktes mit einem Behälterverschluss verschlossen wird, und der verschlossene Kunststoffbehälter (3) aus der Blasform (2) entfernt wird.

8. Verfahren gemäß einem der vorstehenden Ansprüche, **dadurch gekennzeichnet, dass** vor dem Evakuieren des Innenraums (I) des sich in der Blasform (2) befindlichen Kunststoffbehälters (3) auf einen Unterdruck vordem Einleiten des Füllprodukts zunächst ein Spülen des Innenraums (I) des Kunststoffbehälters (3) mit einem definierten Gas, bevorzugt einem Inertgas, durchgeführt wird.

9. Verfahren gemäß einem der vorstehenden Ansprüche, **dadurch gekennzeichnet, dass** der Kunststoffbehälter (3) ein PET-Kunststoffbehälter ist, welcher durch Blasen oder Streckblasen hergestellt wird,
und/oder das Füllprodukt ein karbonisiertes Füllprodukt, bevorzugt ein karbonisiertes Getränk, besonders bevorzugt Bier, ein karbonisierter Softdrink, oder Mineralwasser, ist, und/oder das Füllprodukt ein stilles Füllprodukt ist, bevorzugt ein stilles Getränk, besonders bevorzugt ein stilles Wasser, ein Saft oder ein Teeprodukt, ist.

10. Verfahren gemäß einem der vorstehenden Ansprüche, **dadurch gekennzeichnet, dass** vor und/oder während und/oder nach dem Einleiten des Füllprodukts in den Innenraum (I) des Kunststoffbehälters (3) ein Aroma und/oder ein Getränkezusatz und/oder eine Getränkekomponente in den Innenraum (I) des Kunststoffbehälters (3) eindosiert wird.

11. Vorrichtung (1) zum Herstellen eines Kunststoffbehälters (3) und zu dessen Befüllung mit einem Füllprodukt, umfassend eine Blasform (2) zum Blasen beziehungsweise Streckblasen eines Kunststoffbehälters (3) aus einem Preform (30), eine Füllproduktzuführung (50) zum Zuführen eines Füllprodukts in den noch in der Blasform (2) angeordneten Kunststoffbehälter (3), und eine Vakuumvorrichtung (6) zum Evakuieren des Innenraums (I) des in der Blasform (2) aufgenommenen Kunststoffbehälters (3) vor dem Einfüllen des Füllprodukts,
**dadurch gekennzeichnet, dass**
ein Füllproduktventil (52) und ein Vakuumventil (60) über eine Steuervorrichtung derart angesteuert werden, dass die Vakuumvorrichtung (6) zum Evakuieren über das geöffnete Vakuumventil (60) und bei geschlossenem Füllproduktventil (52) mit einer mit der Mündung des Kunststoffbehälters (3) dichtend in Eingriff stehenden Fülldüse (5) in Kommunikation gebracht wird, und dann die Füllproduktzuführung (50) zum Zuführen des unter einem Umgebungsdruck oder Überdruck stehenden Füllprodukts mittels des geöffneten Füllproduktventils (52) und bei geschlossenem Vakuumventil (60) mit der Fülldüse (5) in Kommunikation gebracht wird, und
dass der Innenraum (I) des Kunststoffbehälters (3) vor dem Einleiten des unter dem Umgebungsdruck oder Überdruck Füllprodukts auf einen Unterdruck bei einem Absolutdruck von 0,5 bar bis 0,05 bar evakuiert wird.

12. Vorrichtung (1) gemäß Anspruch 11, **dadurch gekennzeichnet, dass** die Blasform (2) druckdicht ausgebildet ist, um einen Unterdruck in der Blasform (2) im Wesentlichen halten zu können,
und/oder die Blasform (2) mit der Vakuumvorrichtung (7) in Kommunikation bringbar ist, um eine Kavität (20) der Blasform (2) vor dem Einbringen des Füllprodukts in den Kunststoffbehälter (3) auf einen Unterdruck evakuieren zu können,
und/oder eine Blasdüse (4) zum Blasen beziehungsweise Streckblasen eines in der Blasform (2) angeordneten Preforms (30) in einen Kunststoffbehälter (3) vorgesehen ist, und die Fülldüse (5) weiterhin dazu eingerichtet ist, den Innenraum (I) des Kunststoffbehälters (3) zu evakuieren und ein Füllprodukt in den evakuierten Innenraum (I) des Kunststoffbehälters (3) einzubringen.

13. Vorrichtung (1) gemäß Anspruch 11 oder 12, **dadurch gekennzeichnet, dass eine** Blasdüse (4) zum Blasen beziehungsweise Streckblasen eines in der Blasform (2) angeordneten Preforms (30) in einen Kunststoffbehälter (3) vorgesehen ist, und weiterhin die Fülldüse (5) zum Evakuieren des Innenraums (I) des Kunststoffbehälters (3) auf einen Unterdruck sowie zum Einfüllen eines Füllprodukts in den evakuierten Innenraum (I) des Kunststoffbehälters (3) vorgesehen ist, wobei die Blasdüse (4) und die Fülldüse (5) nacheinander mit der Mündung (26) des Preforms (30) beziehungsweise des Kunststoffbehälters (3) dichtend in Eingriff bringbar sind.

14. Vorrichtung (1) gemäß einem der Ansprüche 11 bis 13, **dadurch gekennzeichnet, dass** eine Mehrzahl von Blasformen (2) an einem Rundläuferkarussell (80) angeordnet sind, und an dem Rundläuferkarussell (80) sowohl das Blasen oder Streckblasen eines Kunststoffbehälters (3) aus einem in der jeweiligen Blasform (2) aufgenommenen Preform (30), als auch ein Evakuieren des Innenraums (I) des Kunststoffbehälters (3) und ein Einleiten des Füllprodukts in den evakuierten Innenraum (I) durchführbar ist.

15. Vorrichtung (1) gemäß Anspruch 14, **dadurch gekennzeichnet, dass** weiterhin ein Verschließer (89) an dem Rundläuferkarussell (80) vorgesehen ist, mittels welchem der befüllte Kunststoffbehälter (3) mit einem Behälterverschluss verschlossen werden kann, und/oder weiterhin eine Etikettiervorrichtung (87) vorgesehen ist, mittels welcher die aus den Blasformen (2) entnommenen Kunststoffbehälter (3) etikettiert werden können, und/oder vor der Blasform (2) ein Entkeimungsmodul (88) vorgesehen ist, um die Preforms (30) vor der Aufnahme in der Blasformen (2) zu entkeimen,
und/oder ein Aromadosierer (58) zum Eindosieren eines Aromas und/oder eines Getränkezusatzes und/oder einer Getränkekomponente in den Innenraum (I) des Kunststoffbehälters (3) vorgesehen ist.

## Claims

1. Method for producing a plastic container and filling it with a filling product, comprising the introduction of a preform (30) into a blow mould (2) and application of a blowing medium to the preform (30) for the production of a plastic container (3),
**characterised in that**
before the introduction of the filling product into the already blow-moulded plastic container (3) the interior space (I) of the plastic container (3) received in the blow mould (2) is evacuated to a negative pressure with an absolute pressure of 0.5 bar to 0.05 bar, and a filling product at a positive pressure or ambient pressure is introduced into the interior space (I) of the plastic container (3) which is at a negative pressure, so that during the filling with the filling product no fluid is displaced by the filling product and accordingly no fluid flows out of the interior space of the plastic container (3).

2. Method according to claim 1, **characterised in that** before the introduction of the filling product the plastic container (3) is evacuated to a negative pressure with an absolute pressure of 0.3 bar to 0.1 bar, preferably of 0.1 bar,
and/or the filling product is provided at a positive pressure or ambient pressure with an absolute pressure of 1 bar to 9 bar, preferably at an absolute pressure of 2.5 bar to 6 bar, particularly preferably at an absolute pressure of 2.8 bar to 3.3 bar.

3. Method according to claim 1 or 2, **characterised in that** the filling product is provided at an ambient pressure, preferably at an absolute pressure of 1 bar, or at a positive pressure which corresponds to the saturation pressure of the filling product, preferably at an absolute pressure of 1.1 bar to 6 bar, or at a positive pressure which is above the saturation pressure of the filling product, preferably at an absolute pressure of 1.6 bar to 9 bar.

4. Method according to any of the preceding claims, **characterised in that** after the introduction of the filling product a pressurising gas at an absolute pressure of 2 bar to 9 bar, preferably at an absolute pressure of 3.5 bar to 7 bar, particularly preferably at an absolute pressure of 3.8 bar to 5.5 bar, is applied to the filled plastic container (3).

5. Method according to any of the preceding claims, **characterised in that,** before the blowing medium is applied to the preform (30), before the evacuation of the interior space (I) of the plastic container (3) and/or before the introduction of the filling product into the interior space (I) of the plastic container (3), the exterior space (O) defined between the preform (30) and/or plastic container (3) and an inner wall (22) of the cavity (20) of the blow mould (2) is evacuated to a negative pressure.

6. Method according to claim 5, **characterised in that** the exterior space (O) is evacuated to a negative pressure with an absolute pressure of 0.5 bar to 0.05 bar, preferably 0.3 bar to 0.1 bar, particularly preferably 0.1 bar,
and/or before the introduction of the filling product into the interior space (I) of the plastic container (3) the pressure in the interior space (I) and in the exterior space (O) is equalised,
and/or before the introduction of the filling product the pressure in the interior space (I) of the plastic container (3) is lower than the pressure in the exterior space (O) in order to detach the plastic container (3) from the inner wall (22) of the cavity (20) of the blow mould (2).

7. Method according to any of the preceding claims, **characterised in that** after the introduction of the filling product a pressurising gas at a positive pressure is applied to the plastic container (3),
and/or after the introduction of the filling product the plastic container (3) is closed with a container closure, and the closed plastic container (3) is removed from the blow mould (2).

8. Method according to any of the preceding claims, **characterised in that** before the evacuation of the interior space (I) of the plastic container (3) located in the blow mould (2) to a negative pressure before the introduction of the filling product, first of all the interior space (I) of the plastic container (3) is flushed with a defined gas, preferably an inert gas.

9. Method according to any of the preceding claims, **characterised in that** the plastic container (3) is a PET plastic container which is produced by blow moulding or stretch blow moulding,
and/or the filling product is a carbonated filling product, preferably a carbonated drink, particularly preferably beer, a carbonated soft drink, or mineral water, and/or the filling product is a still filling product, preferably a still drink, particularly preferably a still water, a juice or a tea product.

10. Method according to any of the preceding claims, **characterised in that,** before and/or during and/or after the introduction of the filling product into the interior space (I) of the plastic container (3) a flavouring and/or a drink additive and/or a drink component is dosed into the interior space (I) of the plastic container (3).

11. Device (1) for producing a plastic container (3) and for filling it with a filling product, comprising a blow mould (2) for blowing or stretch blow moulding a plastic container (3) from a preform (30), a filling product feed (50) for feeding a filling product into the plastic container (3) which is still arranged in the blow mould (2), and a vacuum device (6) for evacuating the interior space (I) of the plastic container (3) which is received in the blow mould (2), before the introduction of the filling product,
**characterised in that**
a filling product valve (52) and a vacuum valve (60) are controlled via a control device in such a way that the vacuum device (6) is brought into communication with a filling nozzle (5) which is in sealing engagement with the mouth of the plastic container (3) for evacuation via the opened vacuum valve (60) and with the filling product valve (52) closed, and then the filling product feed (50) is brought into communication with the filling nozzle (5) for feeding the filling product at an ambient pressure or positive pressure by means of the opened filling product valve (52) and with the vacuum valve (60) closed, and
that before the introduction of the filling product at ambient pressure or positive pressure the interior space (I) of the plastic container (3) is evacuated at an absolute pressure of 0.5 bar to 0.05 bar.

12. Device (1) according to claim 11, **characterised in that** the blow mould (2) is designed to be pressure-tight in order to be able to substantially retain a negative pressure in the blow mould (2),
and/or the blow mould (2) can be brought into communication with the vacuum device (7) in order to be able to evacuate a cavity (20) of the blow mould (2) before the introduction of the filling product into the plastic container (3) to a negative pressure,
and/or a blow moulding die (4) is provided for blow moulding or stretch blow moulding of a preform (30) arranged in the blow mould (2) into a plastic container (3), and furthermore the filling nozzle (5) is designed to evacuate the interior (I) of the plastic container (3) and to introduce a filling product into the evacuated interior space (I) of the plastic container (3).

13. Device (1) according to claim 11 or 12, **characterised in that** a blow moulding die (4) is provided for blow moulding or stretch blow moulding of a preform (30) arranged in the blow mould (2) into a plastic container (3), and furthermore the filling nozzle (5) is provided for evacuation of the interior space (I) of the plastic container (3) to a negative pressure and also for introduction of a filling product into the evacuated interior space (I) of the plastic container (3), whereby the blow moulding die (4) and the filling nozzle (5) can be brought successively into sealing engagement with the mouth (26) of the preform (30) or of the plastic container (3).

14. Device (1) according to one of claims 11 to 13, **characterised in that** a plurality of blow moulds (2) are arranged on a rotary carousel (80), and on the rotary carousel (80) both the blow moulding or stretch blow moulding of a plastic container (3) from a preform (30) received in the respective blow mould (2), and also an evacuation of the interior space (I) of the plastic container (3) and an introduction of the filling product into the evacuated interior space (I) can be carried out.

15. Device (1) according to claim 14, **characterised in that** furthermore a closer (89), by means of which the filled plastic container (3) can be closed with a container closure, is provided on the rotary carousel (80), and/or furthermore a labelling device (87) is provided, by means of which the plastic containers (3) removed from the blow moulds (2) can be labelled, and/or a sterilisation module (88) is provided before the blow mould (2) in order to sterilise the preforms (30) before they are received in the blow moulds (2),
and/or a flavouring doser (58) for dosing a flavouring and/or a drink additive and/or a drink component into the interior (I) of the plastic container (3) is provided.

## Revendications

1. Procédé pour produire un récipient en plastique ainsi que son remplissage avec un produit de remplissage, comprenant l'introduction d'une préforme (30) dans un moule de soufflage (2) et l'application d'un milieu de soufflage sur la préforme (30) pour produire un récipient en plastique (3),
**caractérisé en ce que,**
avant le remplissage du produit de remplissage dans le récipient en plastique (3) pré-soufflé, l'espace intérieur (I) du récipient en plastique (3) logé dans le moule de soufflage (2) est mis sous vide en dépression à une pression absolue de 0,5 bar à 0,05 bar et un produit de remplissage en surpression ou pression ambiante est introduit dans l'espace intérieur (I) en dépression du récipient en plastique (3), de sorte que lors du remplissage du produit de remplissage, aucun fluide n'est déplacé à travers le produit de remplissage et en conséquence aucun fluide ne ressort de l'espace intérieur du récipient en plastique (3).

2. Procédé selon la revendication 1, **caractérisé en ce que** le récipient en plastique (3) avant l'introduction du produit de remplissage est mis sous vide en dépression à une pression absolue de 0,3 bar à 0,1 bar, de préférence de 0,1 bar,
et/ou le produit de remplissage est fourni sous une surpression ou pression ambiante avec une pression absolue de 1 bar à 9 bar, de préférence sous une pression absolue de 2,5 bar à 6 bar, de manière particulièrement préférée sous une pression absolue de 2,8 bar à 3,3 bar.

3. Procédé selon la revendication 1 ou 2, **caractérisé en ce que** le produit de remplissage est fourni sous une pression ambiante, de préférence sous une pression absolue de 1 bar, ou sous une surpression, qui correspond à la pression de saturation du produit de remplissage, de préférence à une pression absolue de 1,1 bar à 6 bar, ou sous une surpression qui est supérieure à la pression de saturation du produit de remplissage, de préférence sous une pression absolue de 1,6 bar à 9 bar.

4. Procédé selon l'une quelconque des revendications précédentes, **caractérisé en ce que** le récipient en plastique rempli (3) après l'introduction du produit de remplissage est alimenté en un un gaz de tension sous une pression absolue de 2 bar à 9 bar, de préférence sous une pression absolue de 3,5 bar à 7 bar, de manière particulièrement préférée sous une pression absolue de 3,8 bar à 5,5 bar.

5. Procédé selon l'une quelconque des revendications précédentes, **caractérisé en ce que** l'espace extérieur (O) défini entre la préforme (30) et/ou le récipient en plastique (3) et une paroi intérieure (22) de la cavité (20) du moule de soufflage (2), avant l'application du milieu de soufflage sur la préforme (30), avant la mise sous vide de l'espace intérieur (I) du récipient en plastique (3) et/ou avant l'introduction du produit de remplissage dans l'espace intérieur (I) du récipient en plastique (3), est mis sous vide en dépression.

6. Procédé selon la revendication 5, **caractérisé en ce que** l'espace extérieur (O) est mis sous vide en dépression à une pression absolue de 0,5 à 0,05 bar, de préférence de 0,3 bar à 0,1 bar, de manière particulièrement préférée de 0,1 bar,
et/ou avant l'introduction du produit de remplissage dans l'espace intérieur (I) du récipient en plastique (3), la pression dans l'espace intérieur (I) et dans l'espace extérieur (O) est égalisée,
et/ou la pression dans l'espace intérieur (I) du récipient en plastique (3) avant l'introduction du produit de remplissage est inférieure à la pression dans l'espace extérieur (O) pour détacher le récipient en plastique (3) de la paroi intérieure (22) de la cavité (20) du moule de soufflage (2).

7. Procédé selon l'une quelconque des revendications précédentes, **caractérisé en ce que** le récipient en plastique (3) est alimenté après l'introduction du produit de remplissage avec un gaz de tension en surpression,
et/ou le récipient en plastique (3) est fermé avec une fermeture de récipient après l'introduction du produit de remplissage, et le récipient en plastique fermé (3) est retiré du moule de soufflage (2).

8. Procédé selon l'une quelconque des revendications précédentes, **caractérisé en ce que** avant la mise sous vide de l'espace intérieur (I) du récipient en plastique (3) situé dans le moule de soufflage (2) en dépression avant l'introduction du produit de remplissage, un rinçage de l'espace intérieur (I) du récipient en plastique (3) est d'abord effectué avec un gaz défini, de préférence un gaz inerte.

9. Procédé selon l'une quelconque des revendications précédentes, **caractérisé en ce que** le récipient en plastique (3) est un récipient en plastique PET qui est fabriqué par soufflage ou étirage-soufflage,
et/ou le produit de remplissage est un produit de remplissage gazéifié, de préférence une boisson gazeuse, de manière particulièrement préférée de la bière, une boisson gazeuse ou de l'eau minérale, et/ou le produit de remplissage est un produit de remplissage plat, de préférence une boisson plate, de manière particulièrement préférée de l'eau plate, un jus ou un produit à base de thé.

10. Procédé selon l'une quelconque des revendications précédentes, **caractérisé en ce que** avant et/ou pendant et/ou après l'introduction du produit de remplissage dans l'espace intérieur (I) du récipient en plastique (3), un arôme et/ou un additif pour boisson et/ou un composant pour boisson est versé dans l'espace intérieur (I) du récipient en plastique (3).

11. Dispositif (1) pour fabriquer un récipient en plastique (3) et pour le remplir d'un produit de remplissage, comprenant un moule de soufflage (2) pour souffler et/ou étirer-souffler un récipient en plastique (3) à partir d'une préforme (30), une alimentation en produit de remplissage (50) pour amener un produit de remplissage dans le récipient en plastique (3) qui est toujours disposé dans le moule de soufflage (2), et un dispositif de mise sous vide (6) pour mettre sous vide l'espace intérieur (I) du récipient en plastique (3) logé dans le moule de soufflage (2) avant le remplissage du produit de remplissage,
**caractérisé en ce que**
une vanne de produit de remplissage (52) et une vanne de mise sous vide (60) sont commandées par un dispositif de commande de telle sorte que le dispositif de mise sous vide (6), destiné à la mise sous vide via la vanne de mise sous vide ouverte (60) et lorsque la vanne de produit de remplissage est fermée (52), est amené en communication avec une buse de remplissage (5) en prise étanche avec l'embouchure du récipient en plastique (3), et ensuite l'alimentation en produit de remplissage (50) pour amener le produit de remplissage sous pression ambiante ou surpression est amenée en communication avec la buse de remplissage (5) au moyen de la vanne de produit de remplissage ouverte (52) et lorsque la vanne de mise sous vide est fermée (60), et
**en ce que** l'espace intérieur (I) du récipient en plastique (3) avant l'introduction du produit de remplissage sous pression ambiante ou surpression est mis sous vide en dépression à une pression absolue de 0,5 bar à 0,05 bar.

12. Dispositif (1) selon la revendication 11, **caractérisé en ce que** le moule de soufflage (2) est conçu pour être étanche à la pression afin de pouvoir maintenir essentiellement une dépression dans le moule de soufflage (2),
et/ou le moule de soufflage (2) peut être amené en communication avec le dispositif de mise sous vide (7), afin de pouvoir mettre sous vide en dépression une cavité (20) du moule de soufflage (2) avant l'introduction du produit de remplissage dans le récipient en plastique (3), et/ou une buse de soufflage (4) est prévue pour souffler et/ou étirer-souffler une préforme (30) disposée dans le moule de soufflage (2) dans un récipient en plastique (3), et la buse de remplissage (5) est en outre installée pour mettre sous vide l'espace intérieur (I) du récipient en plastique (3) et pour introduire un produit de remplissage dans l'espace intérieur sous vide (I) du récipient en plastique (3).

13. Dispositif (1) selon la revendication 11 ou 12, **caractérisé en ce qu'une** buse de soufflage (4) est prévue pour souffler et/ou étirer-souffler une préforme (30) disposée dans le moule de soufflage (2) dans un récipient en plastique (3), et en outre la buse de remplissage (5) est prévue pour mettre sous vide l'espace intérieur (I) du récipient en plastique (3) en dépression et pour remplir un produit de remplissage dans l'espace intérieur sous vide (I) du récipient en plastique (3), la buse de soufflage (4) et la buse de remplissage (5) pouvant être amenées successivement en prise étanche avec l'embouchure (26) de la préforme (30) et/ou du récipient en plastique (3).

14. Dispositif (1) selon l'une quelconque des revendications 11 à 13, **caractérisé en ce que** plusieurs moules de soufflage (2) sont disposés sur un carrousel rotatif (80), et le carrousel rotatif (80) permet d'exécuter aussi bien le soufflage ou l'étirage-soufflage d'un récipient en plastique (3) à partir d'une préforme (30) logée dans le moule de soufflage respectif (2) qu'une mise sous vide de l'espace intérieur (I) du récipient en plastique (3) et une introduction du produit de remplissage dans l'espace intérieur sous vide(l).

15. Dispositif (1) selon la revendication 14, **caractérisé en ce qu'un** dispositif d'obturation (89) est également prévu sur le carrousel rotatif (80), au moyen duquel le récipient en plastique rempli (3) peut être fermé avec une fermeture de récipient,
et/ou un dispositif d'étiquetage (87) est en outre prévu, au moyen duquel les récipients en plastique (3) prélevés des moules de soufflage (2) peuvent être étiquetés,
et/ou un module de désinfection (88) est prévu en amont du moule de soufflage (2) pour désinfecter les préformes (30) avant leur réception dans les moules de soufflage (2),
et/ou un doseur d'arôme (58) est prévu pour doser un arôme et/ou un additif pour boisson et/ou un composant pour boisson dans l'espace intérieur (I) du récipient en plastique (3).
